(19) Europäisches Patentamt / European Patent Office / Office européen des brevets

(11) **EP 4 374 188 B1**

(12) **FASCICULE DE BREVET EUROPEEN**

(45) Date de publication et mention de la délivrance du brevet:
**15.10.2025 Bulletin 2025/42**

(21) Numéro de dépôt: **22757870.5**

(22) Date de dépôt: **25.07.2022**

(51) Classification Internationale des Brevets (IPC):
**G01S 5/14** *(2006.01)*     **G01S 13/82** *(2006.01)*
**G01S 13/84** *(2006.01)*     **G01S 13/87** *(2006.01)*
**G01S 5/00** *(2006.01)*     **G01S 11/02** *(2010.01)*

(52) Classification Coopérative des Brevets (CPC):
**G01S 5/0063; G01S 11/02; G01S 13/825;
G01S 13/84; G01S 13/878**

(86) Numéro de dépôt international:
**PCT/EP2022/070842**

(87) Numéro de publication internationale:
**WO 2023/002064 (26.01.2023 Gazette 2023/04)**

(54) **DISPOSITIF ET PROCÉDÉ DE POSITIONNEMENT CENTIMETRIQUE D'UN MOBILE**

VORRICHTUNG UND VERFAHREN ZUR POSITIONIERUNG EINES SICH BEWEGENDEN OBJEKTS AUF MIKROMETEREBENE

DEVICE AND METHOD FOR CENTIMETRE-LEVEL POSITIONING OF A MOVING OBJECT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.07.2021 FR 2107985**

(43) Date de publication de la demande:
**29.05.2024 Bulletin 2024/22**

(73) Titulaires:
• **PARIS SCIENCES ET LETTRES**
  **75006 Paris (FR)**
• **Ecole Supérieure de Physique et de Chimie
  Industrielles de la Ville de Paris
  75005 Paris (FR)**
• **Centre National de la Recherche Scientifique
  75016 Paris (FR)**
• **SORBONNE UNIVERSITE
  75006 Paris (FR)**

(72) Inventeurs:
• **HOLE, Stéphane**
  **75013 PARIS (FR)**
• **DITCHI, Thierry**
  **91310 LEUVILLE SUR ORGE (FR)**
• **LUCAS, Jérôme**
  **91300 MASSY (FR)**
• **GERON, Emmanuel**
  **45640 SANDILLON (FR)**

(74) Mandataire: **Cornuejols, Marine Sophie
  Cassiopi
  230, avenue de l'Aube Rouge
  34170 Castelnau-le-Lez (FR)**

(56) Documents cités:
WO-A1-2021/058331     US-A1- 2010 321 245
US-A1- 2014 035 732     US-A1- 2019 319 722
US-B2- 8 711 038

• BHOLA R PANTA ET AL: "Range Variation Monitoring with Wireless Two-Way Interferometry (Wi-Wi)", ARXIV.ORG, CORNELL UNIVERSITY LIBRARY, 201 OLIN LIBRARY CORNELL UNIVERSITY ITHACA, NY 14853, 6 June 2018 (2018-06-06), XP080887695

EP 4 374 188 B1

**Description**

Domaine technique de l'invention

La présente invention vise un dispositif et un procédé de positionnement centimétrique d'un mobile dans un environnement extérieur et/ou intérieur. Elle s'applique, notamment, au positionnement de véhicules en agglomération, à la conduite autonome de véhicules ou de mobiles, à l'aide aux mal voyants ou aux personnes à mobilité réduite, à la vérification de positions de stationnement de véhicules en libre-service, à l'information touristique ou publicitaire.

État de la technique

L'estimation de la position d'un véhicule sur sa voie de circulation est un point clé pour l'autonomie des déplacements mais aussi pour la sécurité en détectant des trajectoires inadaptées. À l'heure actuelle, la tendance est d'utiliser un grand nombre de capteurs embarqués dans le véhicule pour reconnaitre son environnement, par exemple un système de positionnement par satellites, des caméras, des radars, des lidars, et ainsi positionner le véhicule sur une carte numérique. Cependant ces systèmes sont peu précis et soumis à de nombreux biais. Les solutions basées sur le positionnement par satellite souffrent du multi-trajet des ondes électromagnétiques en ville, le positionnement ayant ainsi une précision de quelques mètres.

D'autres systèmes utilisent des caméras de détection de bord de route ou de marquages, par exemple des réflecteurs au sol, ou des lidars. Les caméras et les lidars sont gênés par la variance temporelle des scènes qui brouillent les indices de reconnaissance, par les masquages des points d'intérêt par des véhicules garés et par la puissance de calcul nécessaire.

Une autre approche est la coopération entre le véhicule et une infrastructure fixe. Dans cette approche, l'infrastructure et le véhicule communiquent de sorte à garantir la qualité de l'information fournie. Ainsi, les tâches des systèmes embarqués sont réduites et la fiabilité et la robustesse sont accrues. Cela nécessite cependant des investissements importants en infrastructure.

On connaît des systèmes composés de capteurs embarqués dans un véhicule capables de détecter des éléments passifs positionnés sur la chaussée et d'en déterminer la distance au véhicule. Ces éléments passifs servent ainsi de point de repère précis et, étant simples et passifs, ils sont très peu couteux. Cependant cette technologie est davantage adaptée aux routes et ne s'applique pas directement à la problématique de la ville ou dans des lieux privés, par exemple pour le stationnement dans un parking souterrain. En effet dans une ville, il n'y a pas toujours de marquages au sol sous lesquels inclure des éléments passifs et les bords de route sont souvent encombrés ce qui empêche les trajets directs et donc un positionnement précis. Le document US2010/321245 décrit un émetteur-récepteur multibande et un système de positionnement utilisant cet émetteur-récepteur.

Objet de l'invention

La présente invention vise à remédier à tout ou partie de ces inconvénients.

À cet effet, la présente invention vise, selon un premier aspect, un système selon la revendication 1.

Grâce à ces dispositions, la précision du système de positionnement est très élevée. A minima, lorsque la mesure de décalage est un nombre entier de points du motif, par exemple en cas de mesure par autocorrélation, elle est de l'ordre du double de la durée entre l'émission de deux points d'un motif, multipliée par la vitesse de propagation du signal. Lorsque la mesure du décalage de points du motif est continue, par exemple parce qu'elle est basée sur une analyse fréquentielle, par exemple par transformée de Fourrier, la précision du positionnement peut être beaucoup plus élevée.

Dans des modes de réalisation, le dispositif, et chaque base si elle comporte un moyen de mesure de décalage de motif, comporte un moyen de mesure du déphasage de la porteuse d'un signal reçu par rapport à la phase d'un signal sinusoïdal généré par une horloge du dispositif, et une horloge de chaque base si elle comporte un moyen de mesure de décalage, le moyen de détermination de distance du dispositif additionnant le déphasage mesuré au décalage mesuré pour mesurer la distance du dispositif à chaque base.

Grâce à ces dispositions, la précision du système de positionnement est de l'ordre du double de la capacité de discrimination d'un déphasage de signaux, multiplié par la vitesse de propagation du signal.

Dans des modes de réalisation, le signal émis par le dispositif et par chaque base est en quadrature IQ et, pour au moins un déphasage prédéterminé de la porteuse de ce signal, le signal sur la voie I est constant et le signal sur la voie Q porte la modulation en amplitude du motif émis par le dispositif.

Dans des modes de réalisation, pour mesurer le premier et le deuxième décalages, la base et le dispositif comportent un moyen de réalisation d'un ajustement linéaire des points du motif reçu dans le plan IQ, chaque décalage mesuré étant égal au décalage de motif additionné au déphasage mesuré, ce déphasage mesuré étant égal à la différence entre

- l'angle entre la verticale dans ce plan et la droite obtenue par ajustement linéaire, et
- ledit déphasage prédéterminé.

Dans des modes de réalisation :

c) chaque base comporte un moyen de réalisation d'un ajustement linéaire des points du motif reçu dans le plan IQ, et un moyen de mesure de déphasage, ce déphasage mesuré étant égal à la différence entre

- l'angle entre la verticale dans ce plan et la droite obtenue par ajustement linéaire, et
- ledit déphasage prédéterminé ;

l'émetteur de chaque base étant configuré pour émettre un signal IQ déphasé, par rapport au signal reçu, en négatif, de deux fois le déphasage mesuré de telle manière que la phase du signal émis par la base est en phase avec le signal émis par le dispositif ;

d) le dispositif comporte un moyen de réalisation d'un ajustement linéaire des points du motif reçu dans le plan IQ, et un moyen de mesure de déphasage, ce déphasage mesuré étant égal à la différence entre

- l'angle entre la verticale dans ce plan et la droite obtenue par ajustement linéaire, et
- ledit déphasage prédéterminé,

le décalage total mis en œuvre par le dispositif pour mesurer la distance étant la somme du décalage de motif total additionné au déphasage mesuré par le moyen de mesure du dispositif.

Grâce à chacune de ces dispositions, la précision du système de positionnement est de l'ordre du double de la capacité de discrimination d'un déphasage d'une pluralité de n points de motif colinéaires dans le plan IQ, multiplié par la vitesse de propagation du signal. Du fait de la pluralité de n points dans le motif, cette précision est encore supérieure à la précision obtenue par la mesure de déphasage d'un signal sinusoïdal modulé en amplitude.

Dans des modes de réalisation, la période des compteurs est supérieure au double de la durée maximale de vol correspondant à une distance maximale prédéterminée entre le dispositif et une base susceptible de répondre à une requête de ce dispositif.

Dans des modes de réalisation, un motif de n points est une transformée de Fourier inverse d'un spectre constant en amplitude et aléatoire ou pseudo-aléatoire en phase.

Grâce à ces dispositions, la comparaison de motifs servant à déterminer le décalage temporel de motif est plus fiable.

Dans des modes de réalisation, chaque émetteur, du dispositif et des bases, est configuré pour émettre des signaux sur une pluralité de porteuses ayant des fréquences différentes.

L'ambiguïté de mesure d'une distance modulo une autre distance liée à la porteuse, peut être levée.

Dans des modes de réalisation, les motifs émis par tous les dispositifs et par toutes les bases sont identiques.

Grâce à ces dispositions, la mise en œuvre de l'invention est facilitée au niveau des moyens de mesure de décalage temporel de motif.

Dans des modes de réalisation, les motifs émis par au moins deux dispositifs différents sont différents, le signal émis par chaque dispositif comportant des données identifiant ou représentant le motif émis par ce dispositif.

Grâce à ces dispositions, une base peut identifier le dispositif ou le dispositif lui-même peut identifier son propre motif pour la mesure de décalage temporel de motif.

Dans des modes de réalisation, les motifs émis par au moins deux bases différentes sont différents, le signal émis par chaque base comportant des données identifiant ou représentant le motif émis par cette base.

Grâce à ces dispositions, le dispositif peut identifier chaque base avec le motif qu'il reçoit.

Dans des modes de réalisation, chaque signal émis par une base comporte un identifiant de cette base, le moyen de détermination du dispositif étant configuré pour déterminer la position de cette base à partir de son identifiant.

Dans des modes de réalisation, l'identifiant de la base comporte sa position géographique.

Grâce à ces dispositions, le dispositif n'a pas besoin de conserver une base de données à jour des positions des différentes bases puisque les bases lui indiquent leurs positions à jour. Le dispositif est ainsi simplifié et le positionnement plus fiable.

Dans des modes de réalisation, les fréquences des signaux émis par tous les dispositifs et toutes les bases sont dans une bande ISM (industriel, scientifique et médical).

Selon un deuxième aspect, la présente invention vise un dispositif d'un système objet de l'invention.

Selon un troisième aspect, la présente invention vise une base d'un système objet de l'invention.

Dans des modes de réalisation particuliers de cette base, cette base est configurée pour se comporter en dispositif vis-à-vis d'autres bases pour vérifier son positionnement, dans laquelle l'émetteur est configuré pour émettre un message de déplacement au cas où la position déterminée est différente d'une position de cette base précédemment mémorisée.

Ainsi, les bases peuvent vérifier et, le cas échéant, mettre à jour leurs positions cadastrales. Les avantages sont que :

- l'étalonnage géographique du réseau de distances entre les bases est simple à mettre en œuvre, rapide et nécessite peu de main-d'œuvre. Il est donc peu couteux ;
- la mesure régulière du réseau de distances permet de le contrôler et donc de vérifier à tout instant qu'il est opérationnel, de détecter les dysfonctionnements et de corriger rapidement les erreurs.

Dans des modes de réalisation, au moins une base est configurée pour se comporter en dispositif vis-à-vis d'autres bases associées à des points cadastraux pour déterminer sa position. Selon un quatrième aspect, la présente invention vise un procédé selon la revendication 18.

Dans des modes de réalisation, le procédé objet de l'invention comporte une étape d'attribution d'intervalles de temps, ou canaux temporels, aux bases fixes en fonction de leur position géographique, de telle manière que deux bases fixes qui échangent des signaux avec la même base fixe n'aient pas le même intervalle de temps attribué entre elles et avec ladite même base fixe.

On réduit ainsi fortement le risque de collisions de deuxièmes signaux.

Dans des modes de réalisation, le procédé comporte une étape de positionnement des bases fixes vis-à-vis d'autres bases associées à des points cadastraux.

Selon un cinquième aspect, la présente invention vise une utilisation du procédé objet de l'invention, du système objet de l'invention, du dispositif objet de l'invention et/ou de la base objet de l'invention, pour guider un véhicule terrestre ou aérien, guider un piéton en intérieur ou en extérieur, signaler un défaut de stationnement d'un véhicule en libre-service, géolocaliser des éléments dans l'environnement, déterminer la position et l'orientation d'un système de visualisation comportant plusieurs dispositifs à des fins de réalité augmentée pour des applications de génie civil, de loisir, de tourisme, déterminer des gestes, par exemple pour une interface gestuelle ou capter des mouvements corporels.

Les buts, avantages et caractéristiques particulières du dispositif, de la base, du procédé et de l'utilisation objets de l'invention étant similaires à ceux du système objet de l'invention, ils ne sont pas rappelés ici.

Brève description des figures

D'autres avantages, buts et caractéristiques particulières de l'invention ressortiront de la description non limitative qui suit d'au moins un mode de réalisation particulier du dispositif et du procédé objets de l'invention, en regard des dessins annexés, dans lesquels :

La figure 1 représente, schématiquement, un dispositif mobile embarqué et deux bases en communication avec le dispositif,

La figure 2 représente, schématiquement, sous forme de signaux, une mesure de déphasage particulière,

La figure 3 représente, schématiquement, sous forme d'ondes, une autre mesure de déphasage particulière,

La figure 4 représente un décalage d'un motif périodique permanent sur 64 points émis par un dispositif par rapport à celui d'une base et un spectre en amplitude du signal émis par le dispositif,

La figure 5 montre un exemple de mesure du premier mode de réalisation lorsque les fréquences du dispositif et de la base ne sont pas parfaitement égales,

La figure 6 représente, schématiquement, sous forme de trames de données, des communications entre un dispositif et une base ou entre deux bases,

La figure 7 représente, schématiquement, une implantation d'un réseau de bases fixes sur un réseau routier,

La figure 8 représente, schématiquement, un circuit électronique implémentant l'invention dans un dispositif ou dans une base,

La figure 9 donne un graphe de l'estimation de la distance dans un mode de réalisation du dispositif,

La figure 10 représente une erreur d'estimation du décalage en points de deux motifs périodiques permanents sur 64 points en fonction du niveau de bruit par rapport au signal, calcul fait sur une période du motif et sur 100 périodes du motif,

La figure 11 représente, schématiquement, et sous forme d'un logigramme, des étapes d'un mode de réalisation particulier du procédé objet de l'invention,

La figure 12 est un chronogramme de répétition périodique d'un motif,

La figure 13 représente, dans le plan IQ, un signal émis représentatif d'un motif,

La figure 14 représente, dans le plan IQ, un signal reçu correspondant au signal émis illustré en figure 13,

La figure 15 est un chronogramme d'émission et réception d'une requête comportant entre une et deux répétitions d'un motif,

La figure 16 est un chronogramme d'émission et réception d'une réponse à la requête illustrée en figure 15 et la figure 17 représente, sous forme d'un logigramme, des étapes d'un mode de réalisation particulier du procédé objet de l'invention.

Description des modes de réalisation

La présente description est donnée à titre non limitatif, chaque caractéristique d'un mode de réalisation pouvant être combinée à toute autre caractéristique de tout autre mode de réalisation de manière avantageuse.

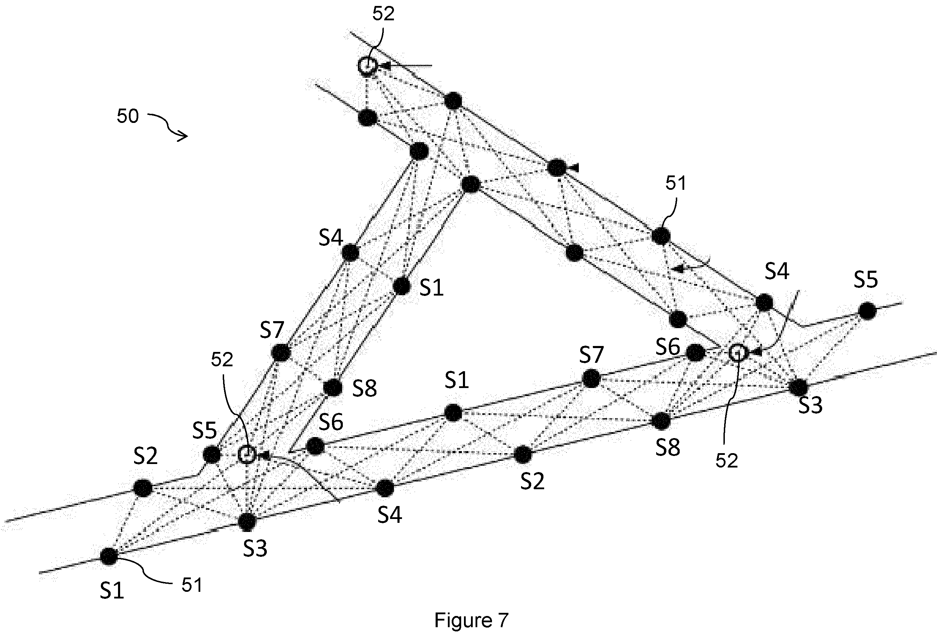

Dans toute la description, on appelle « dispositif » l'appareil qui émet une requête de positionnement et « base », chaque appareil qui répond à une requête de positionnement. Comme exposé dans la description, préférentiellement, chaque base comporte un appareil similaire, voire identique, au dispositif, si bien que chaque base peut déterminer sa position géographique par rapport aux autres bases. Dans toute la description, on considère que le dispositif est mobile et les bases fixes, hormis dans le cas où une base fixe prend le rôle de dispositif pour déterminer sa position géographique, comme exposé en regard de la figure 7. Dans des modes de réalisation, au moins une base est mobile, ce qui permet le positionnement respectif des mobiles qui embarquent une base mobile.

On note dès à présent que les figures ne sont pas à l'échelle.

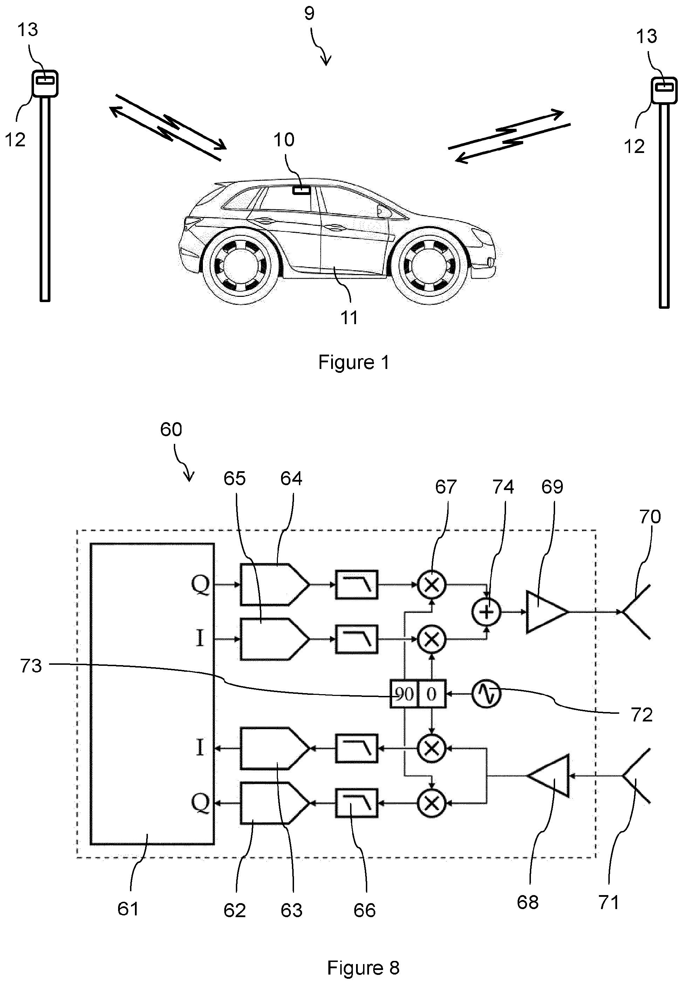

La figure 1 représente, schématiquement, l'environnement d'un dispositif de positionnement 10, dans le cas où il est embarqué dans un véhicule 11. Le dispositif mobile 10 communique avec des bases fixes 12, préférentiellement installées en hauteur, par exemple sur des lampadaires, des panneaux de signalisation, des mâts spécifiques ou des murs de bâtiments. Le dispositif 10 et les bases fixes 12 constituent un système de positionnement 9. Le dispositif mobile 10 et les bases fixes 12 comportent, chacun, un dispositif fixe 13 émetteur/récepteur d'ondes électromagnétiques couplé à une unité de calcul.

Le positionnement s'obtient par la durée de vol (en anglais « Time of flight » ou TOF) des ondes électromagnétiques entre le dispositif mobile 10 et les bases fixes 12. Pour déterminer la position du dispositif mobile 10, il faut au moins trois mesures de distances, ce qui, dans l'art antérieur, nécessite l'utilisation de plusieurs bases fixes 12 et la synchronisation précise en fréquence et en phase de tous les émetteurs/récepteurs des bases fixes 12, voire des dispositifs mobiles 10 embarqués. La synchronisation en fréquence est relativement simple, mais la synchronisation en phase nécessite une horloge absolue. Dans les systèmes de positionnement par satellites, cette horloge absolue est obtenue par des horloges atomiques ultra-stables, ce qui n'est pas envisageable dans le cas d'un réseau terrestre dense nécessaire au positionnement en ville ou dans des bâtiments. Le but de la présente invention est de faire les mesures de distances en s'affranchissant d'une telle horloge absolue.

On suppose, à titre explicatif, que les oscillateurs des émetteurs/récepteurs des bases fixes 12 et du dispositif mobile embarqué 10 sont sensiblement de même fréquence f, mais que la phase de l'un est inconnue de l'autre et réciproquement. Le fait d'être exactement à la même fréquence f implique que lesdites phases inconnues sont constantes dans le temps. Si les fréquences du dispositif et des bases ne sont que sensiblement égales et non égales, les phases inconnues sont lentement variables dans le temps, ce qui ne limite pas la précision du positionnement, comme il est montré plus loin. Pour s'affranchir de ce déphasage inconnu, on utilise les signaux (I,Q) bruts issus des modulateurs/démodulateurs IQ implantés dans les émetteurs/récepteurs des bases fixes 12 et des dispositifs mobiles 10 embarqués sur les mobiles 11.

On rappelle que la modulation d'amplitude en quadrature (en anglais, « quadrature amplitude modulation », « I/Q », « IQ » ou « QAM ») est une forme de modulation d'une porteuse par modification de l'amplitude de la porteuse elle-même et d'une onde en quadrature (une onde déphasée de 90° avec la porteuse) selon l'information transportée par deux signaux d'entrée.

Cela signifie que l'amplitude et la phase de la porteuse sont simultanément modifiées en fonction de l'information à transmettre.

La transmission de deux signaux analogiques à l'aide d'une modulation de type QAM, le signal transmis est de la forme :

$$s(t) = I(t) \cos (2\pi f_0 t) + Q(t) \cos (2\pi f_0 t + \pi/2)$$

dans laquelle $I(t)$ et $Q(t)$ sont les signaux modulants et $f_0$ est la fréquence de porteuse.

Au niveau du récepteur, les deux signaux modulants peuvent être démodulés en utilisant un démodulateur cohérent. Un tel démodulateur multiplie séparément le signal reçu par un cosinus d'une part et par un cosinus déphasé de $\pi/2$ d'autre part. Les deux multiplications vont produire respectivement les estimations des voies $I(t)$ et $Q(t)$. Grâce à la propriété d'orthogonalité des deux porteuses utilisées, il est possible d'extraire les deux signaux modulant de manière indépendante.

Dans un cas idéal, la voie $I(t)$ est démodulée en multipliant le signal reçu par un signal en cosinus :

$$r_i(t) = s(t) \cos (2\pi f_0 t)$$

$$r_i(t) = I(t) \cos (2\pi f_0 t) \cos (2\pi f_0 t) + Q(t) \cos (2\pi f_0 t + \pi/2) \cos (2\pi f_0 t)$$

En utilisant les identités trigonométriques, il vient que :

$$r_i(t) = 1/2 \, I(t) \, [1 + \cos (4\pi f_0 t)] + 1/2 \, Q(t) \cos (4\pi f_0 t + \pi/2)$$

$$r_i(t) = 1/2 \, I(t) + 1/2 \, [I(t) \cos (4\pi f_0 t) + Q(t) \cos (4\pi f_0 t + \pi/2)]$$

On applique un filtre passe-bas sur le signal $r_i(t)$, ce qui supprime les composantes de haute fréquence ($4\pi f_0 t$), et laisse seulement le terme 1/2 I(t). On remarque que ce signal n'est pas affecté par la voie Q(t), ce qui montre bien que la voie I(t) peut être reçue indépendamment de la voie Q(t). De manière analogue, la réception de la voie Q(t) se fait en multipliant le signal reçu s(t) par un signal en cosinus déphasé de $\pi/2$.

Concernant les conventions de phase IQ, les termes "composante I" (ou « voie I ») et "composante Q" (ou « voie Q ») sont des façons courantes de désigner les signaux en phase et en quadrature, respectivement. Les deux signaux comprennent une sinusoïde haute fréquence (ou porteuse) modulée en amplitude par une fonction relativement basse fréquence, généralement porteuse d'une information quelconque. Les deux porteuses sont orthogonales, I étant décalé de ¼ cycle par rapport à Q ou, de manière équivalente, précédant Q de ¾ de cycle.

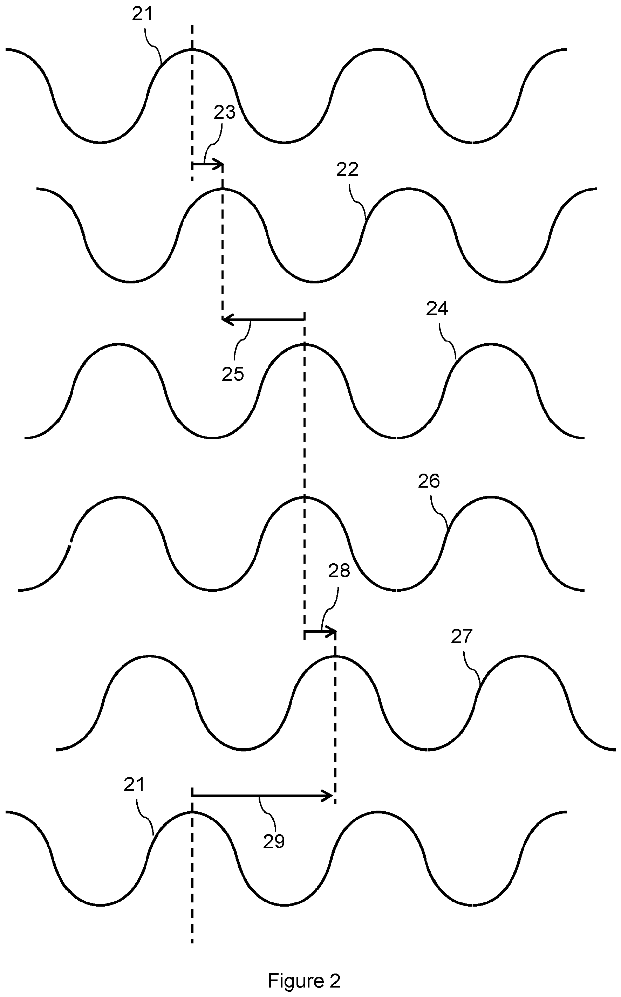

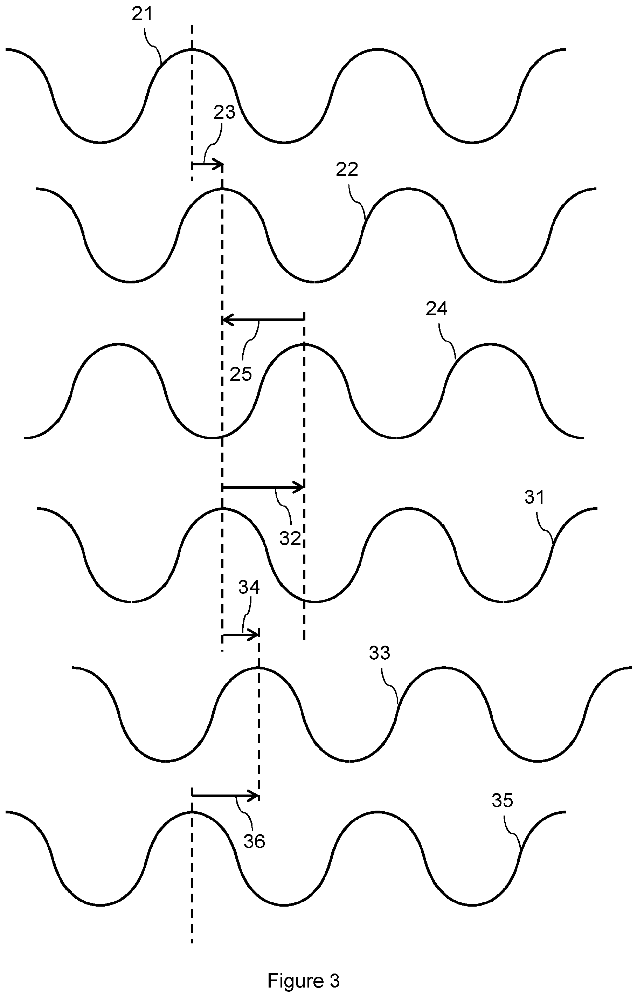

En figures 2 et 3, on ne représente que l'une de ces sinusoïdes orthogonales pour expliquer le fonctionnement de mesures de déphasages et de distances, ce qui correspond à une composante I et/ou Q constante pour un signal en quadrature IQ.

Un dispositif 10 émet un premier signal sinusoïdal 21. Du fait de la durée de vol pour que ce signal 21 atteigne une base 12, le signal 22 reçu par cette base 12 est déphasé par rapport au signal 21, avec un retard de phase 23. Cette base 12 possède une horloge fournissant un signal 24, de fréquence sensiblement égale à celle du signal 21, mais déphasée d'une différence de phase inconnue, par rapport au signal 21.

Dans le mode de réalisation illustré en figure 2, une base 12 qui a reçu le signal 22 mesure le retard de phase 25 du signal 22 par rapport à son horloge 24. Cette base 12 émet ensuite, à destination du dispositif 10 ayant émis le signal 21, un signal 26, synchronisé avec le signal d'horloge 24 et un message représentant le retard de phase 25. Du fait de la durée de vol pour que ce signal 26 atteigne le dispositif 10 ayant émis le signal 21, le signal 27 reçu par ce dispositif 10 est déphasé par rapport au signal 26, avec un retard de phase 28, égal au retard de phase 23.

Le dispositif 10 mesure le retard de phase 29 du signal 27 par rapport au signal 21. Le dispositif 10 extrait la valeur du retard de phase 25 du message reçu de la base 12 et additionne le retard de phase 25 du retard de phase 29. Le dispositif 10 obtient ainsi deux fois le retard de phase 23 et en déduit la distance d entre le dispositif 10 et la base 12 qui a répondu en retournant le signal 26. En effet, deux fois le retard de phase 23 est égal à 4*pi*d/lambda, formule dans laquelle lambda est la longueur d'onde de l'onde 21.

En d'autres termes, lorsqu'une onde 22 arrive sur le récepteur d'une base 12, ce récepteur n'a pas l'information depuis quand cette onde a été émise par l'émetteur du dispositif 10. La base 12 ne peut déterminer que la phase 25 de cette onde par rapport à celle de son oscillateur local. Cette phase, notée phi12 dans la suite, est directement mesurée à partir des signaux (I2,Q2) obtenus à la sortie du démodulateur IQ de la base 12 par

$$phi12 = angle(Q2/I2) = phi2 - (phi1 - 2*\pi *d/lambda) \quad (1)$$

où

- phi1 est la phase inconnue de l'oscillateur local de l'émetteur du dispositif 10,
- phi2 est la phase de l'oscillateur local du récepteur de la base 12,
- d est la distance entre le dispositif 10 et la base 12, et
- lambda est la longueur d'onde de l'onde émise par le dispositif 10.

La phase 25 reçue seule ne permet donc pas de déterminer la distance d lorsque la phase de l'oscillateur local du dispositif 10 n'est pas connue.

La base 12 qui a reçu l'onde, renvoie vers le dispositif 10 qui a émis l'onde, un message contenant la valeur phi12. Le dispositif 10 reçoit alors, à la sortie de son démodulateur IQ, les signaux (I1,Q1) ce qui permet de calculer la phase phi21 telle que

$$phi21 = angle(Q1/I1) = phi1 - (phi2 - 2*\pi *d/lambda) \quad (2)$$

Dans cette expression (2), tout est connu sauf la distance d qu'on peut alors déterminer modulo une demi longueur d'onde lambda puisque

$$phi12 + phi21 = 4*\pi *d/lambda \quad (3)$$

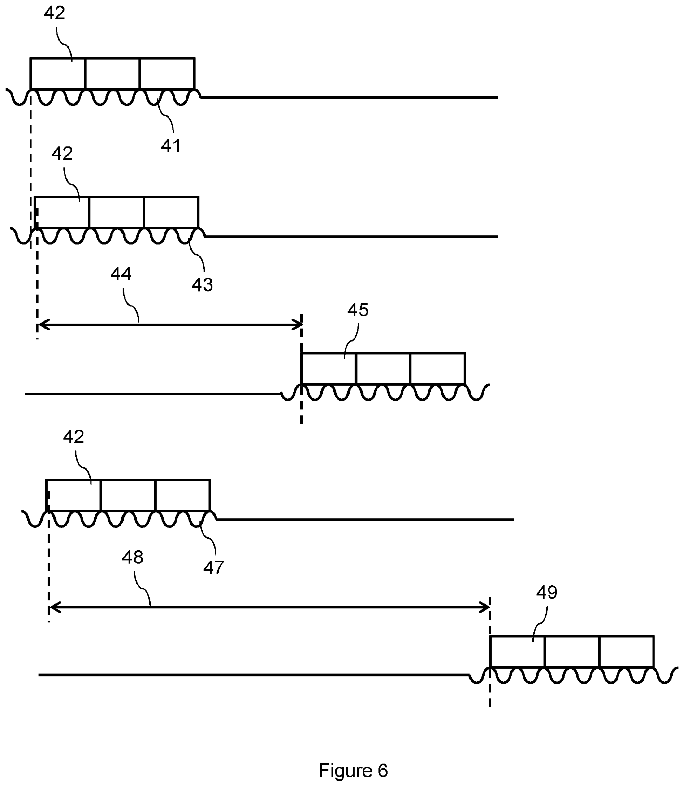

L'indétermination de modulo peut être levée, par exemple, en utilisant plusieurs fréquences f pour les ondes électromagnétiques, et donc plusieurs longueurs d'onde, puisque lambda = c/f, avec c la vitesse de la lumière ; ou en utilisant des techniques connues de corrélation de trames (voir figure 6).

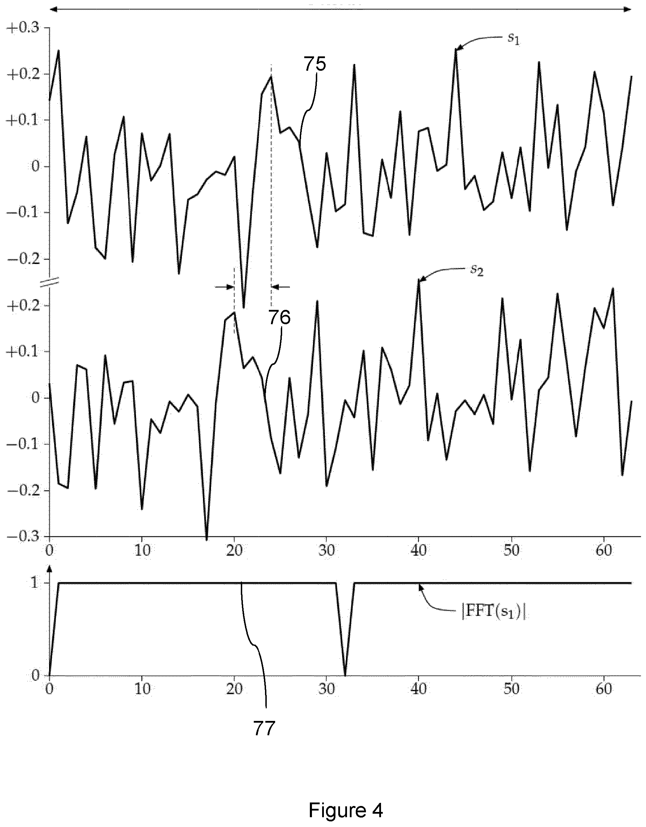

Dans un mode de réalisation illustré en figure 4, l'indétermination du modulo est levée en utilisant un signal I(t) constant dans le temps et un signal Q(t) correspondant à un motif périodique permanent dont la période correspond au temps d'aller-retour d'une onde électromagnétique sur la plage de distances souhaitée et dont le spectre est dense jusqu'à une fréquence maximale $f_{max}$ déterminée par la bande passante du système de communication employé. Un motif sur un nombre donné de points s'obtient par exemple par la transformée de Fourier inverse d'un spectre 77 constant en amplitude mais aléatoire en phase (voir figure 4). Au moment de la démodulation IQ du signal reçu par la base, celle-ci enregistre également le signal périodique permanent qu'elle génère et qui a le même motif que celui émis par le dispositif. La base détermine ainsi la phase 25 en effectuant une rotation de son plan IQ d'un angle de sorte que la composante I soit constante. Ledit angle est alors l'opposé de la phase 25 recherchée et la composante Q obtenue après rotation peut être comparée au motif périodique permanent enregistré par la base au moment de la réception, ce qui permet d'obtenir le décalage de l'un par rapport à l'autre soit en utilisant une corrélation, soit en utilisant les propriétés de la transformée de Fourier sur les signaux décalés. La connaissance de la phase 25 et du décalage calculés par la base pour le signal aller et par le dispositif lors du signal retour, permet d'obtenir la distance sur une grande plage de distances avec une grande précision. La figure 4 représente le décalage de 4,123 points d'un motif périodique permanent 75 sur 64 points émis par le dispositif ($s_1$) par rapport au motif périodique permanent 76 identique au motif 75, de la base ($s_2$).

Dans le mode de réalisation illustré en figure 4, le dispositif 10 n'envoie pas un signal oscillant à une simple fréquence mais un signal 75 oscillant à la fréquence de la première horloge modulé par un motif périodique permanent 77 connu, dont le support fréquentiel est limité à la bande passante autorisée. Lorsque la base 12 reçoit le signal du dispositif 10, la base 12 mesure la phase entre la porteuse du signal reçu et son horloge locale comme décrit précédemment, mais mesure également le décalage temporel entre le motif périodique permanent reçu du dispositif 10 et le motif périodique permanent identique généré dans la base 12. La base 12 renvoie alors au dispositif 10 un signal oscillant à la fréquence de la deuxième horloge modulé par le motif périodique permanent de la base 12, ainsi que les informations de déphasage entre horloges et de décalage entre motifs mesurés. Lorsque le dispositif 10 reçoit cette information, il peut également mesurer le déphasage entre la porteuse du signal reçu et son horloge locale ainsi que le décalage entre le motif reçu et son motif périodique permanent local.

Ayant également reçu par message les informations analogues de la base 12, la combinaison par ajout des déphasages donne la distance entre le dispositif 10 et la base 12 au modulo de la longueur d'onde. La combinaison par ajout des décalages donne la distance entre le dispositif 10 et la base 12 modulo la longueur d'onde correspondant à la fréquence de répétition du motif périodique permanent. Ainsi, la combinaison de décalages de motif 77 permet une grande plage de distances avec une précision qui est limitée par la bande passante du motif alors que la combinaison de déphasage donne une précision inférieure à la longueur d'onde. Dans une variante, la base 12 renvoie un signal oscillant à la fréquence de la deuxième horloge déphasée de sorte à être en phase avec la porteuse reçue modulé par un motif décalé de sorte à être en phase avec le motif reçu. Ainsi, il n'est pas nécessaire d'envoyer l'information de déphasage et de décalage, le déphasage et le décalage reçus en retour au niveau du dispositif 10 sont directement proportionnels à la distance entre le dispositif 10 et la base 12. Dans le mode de réalisation illustré en figure 3, une base 12 qui a reçu le signal 22 mesure le retard de phase 25 du signal 22 par rapport à son horloge. Cette base 12 émet ensuite, à destination du dispositif 10 ayant émis le signal 21, un signal 31, synchronisé avec le signal d'horloge 24 avec une avance de phase 32 égale au retard de phase 25. Le signal 31 est donc en phase avec le signal 22 reçu par cette base 12.

Du fait de la durée de vol pour que ce signal 31 atteigne le dispositif 10 ayant émis le signal 21, le signal 33 reçu par ce dispositif 10 est déphasé par rapport au signal 31, avec un retard de phase 34, égal au retard de phase 23. Le dispositif 10 mesure le retard de phase 36 entre le signal 21 et le signal 33. Le dispositif 10 obtient ainsi deux fois le retard de phase 23 et en déduit la distance d entre le dispositif 10 et la base fixe 12 qui a répondu en retournant le signal 26. En effet deux fois le retard de phase 23 est égal à 4*pi*d/lambda, formule dans laquelle lambda est la longueur d'onde de l'onde 21. En d'autres termes, la base 12 renvoie au dispositif 10 ce qu'il reçoit en prenant I=I2 et Q=Q2. Cela revient à renvoyer une onde en phase avec celle qui avait été reçue comme le montrent les signaux 22 et 31 de la figure 3. En effet, si le dispositif envoie le signal

$$I*cos\ (2\pi f_0 t + phi1),$$

la base reçoit un signal proportionnel à

$$I*cos\ (2\pi f_0(t-d/c)+phi1)$$

à cause du retard dû à la propagation. Après démodulation et filtrage, les composantes I et Q mesurées par la base sont respectivement proportionnelles à

$$*cos\ (-2\pi f_0 d/c+phi1-phi2)\ et\ I*cos\ (-2\pi f_0 d/c+phi1-phi2-\pi/2).$$

La base renvoie alors le même point IQ, ou un point IQ qui lui est proportionnel, c'est-à-dire le signal

$$I*cos\ (-2\pi f_0 d/c+phi1-phi2)*cos\ (2\pi f_0 t+phi2)\ +$$
$$I*cos\ (-2\pi f_0 d/c+phi1-phi2-\pi/2)*cos\ (2\pi f_0 t+phi2+\pi/2),$$

que le dispositif reçoit après le retard de propagation, soit

$$I*cos\ (-2\pi f_0 d/c+phi1-phi2)*cos\ (2\pi f_0(t-d/c)+phi2)\ +$$
$$I*cos\ (-2\pi f_0 d/c+phi1-phi2-\pi/2)*cos\ (2\pi f_0(t-d/c)+phi2+\pi/2).$$

Après démodulation et filtrage, les composantes I et Q mesurées par le dispositif sont respectivement proportionnelles à

$$I*cos\ (-2\pi f_0 d/c+phi1-phi2)*cos\ (-2\pi f_0 d/c+phi2-phi1)\ +$$
$$I*cos\ (-2\pi f_0 d/c+phi1-phi2-\pi/2)*cos\ (-2\pi f_0 d/c+phi2-phi1+\pi/2)$$

et

$$I*cos\ (-2\pi f_0 d/c+phi1-phi2)*cos\ (-2\pi f_0 d/c+phi2-phi1-\pi/2)\ +$$
$$I*cos\ (-2\pi f_0 d/c+phi1-phi2-\pi/2)*cos\ (-2\pi f_0 d/c+phi2+\pi/2-phi1-\pi/2),$$

qui en utilisant les lois de la trigonométrie conduit respectivement pour la composante I et la composante Q à

$$I*cos\ (4\pi f_0 d/c)\ et\ I*cos\ (4\pi f_0 d/c+\pi/2)$$

ce qui montre l'obtention de la phase $4*\pi*d/lambda = 4\pi f_0 d/c$ indépendamment des phases inconnues phi1 et phi2 des horloges du dispositif et de la base.

Dans des modes de réalisation, il est possible de combiner l'utilisation de deux fréquences avec l'utilisation de motifs périodiques permanents, notamment si la bande passante du motif n'est pas suffisante pour lever l'indétermination de modulo de la première fréquence.

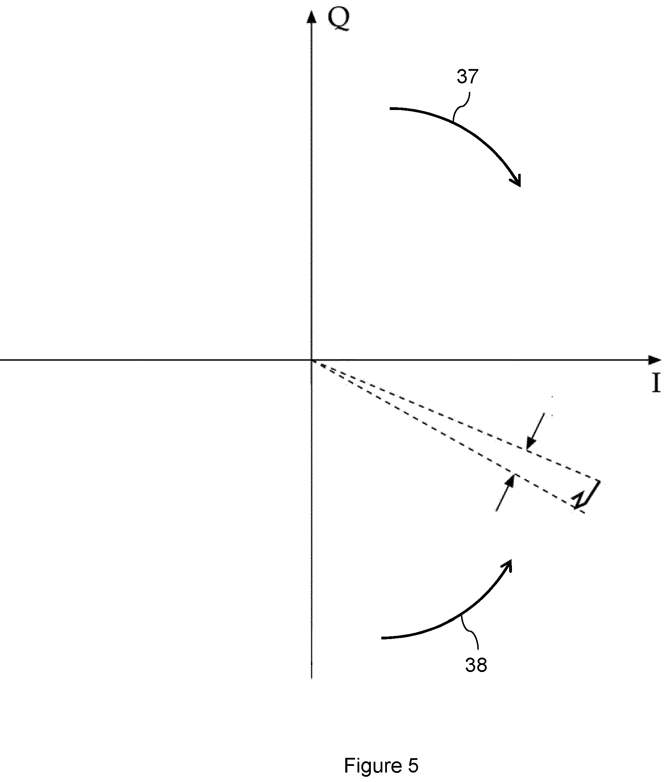

On note que les différents modes de réalisation de l'invention fonctionnent également très bien si les deux oscillateurs ne sont pas exactement à la même fréquence f. La figure 5 montre un exemple de mesures réelles entre un dispositif 10 et une base 12 lorsque la fréquence de leur oscillateur local n'est pas exactement la même, mais simplement sensiblement égale. Ainsi la phase entre les deux oscillateurs varie dans le temps comme indiqué par les flèches 37 et 38 des points IQ représentés ici dans le plan complexe pour le dispositif 10 et pour la base distante 12. Bien que cette phase évolue dans le temps, elle varie dans le sens inverse selon le point de vue du dispositif 10, flèche 37 ou celui de la base distante 12, flèche 38. Ainsi, conformément au premier mode de réalisation, la combinaison des deux mesures par la somme des phases à chaque instant produit un point dans le plan complexe de phase théoriquement fixe, ici avec une précision de 6,4° du fait du bruit de mesure, qui correspond à 4*pi*d/lambda conformément à l'équation (3). Dans le deuxième mode de réalisation, figure 3, il suffit de renvoyer l'onde I=I2(t) et Q=Q2(t).

Le temps de retournement produit alors une phase fixe qu'il est facile de prendre en compte.

Dans un mode de fonctionnement dégradé, où le dispositif ne possède qu'une puissance de calcul très limitée, sa position peut être calculée dans les bases à partir des phases mesurées simultanément par au moins cinq bases environnantes. Dans ce mode de réalisation, le dispositif émet un premier signal qui est reçu par plusieurs bases environnantes. Chacune de ces bases renvoie dans son canal temporel le point IQ mesuré, mais reconnaissant le fonctionnement en mode dégradé par l'identifiant envoyé par le premier dispositif, ce n'est pas le dispositif qui mesure le signal retourné mais chacune desdites bases environnantes. Celles-ci peuvent alors combiner les phases mesurées par chacune des autres bases ce qui permet de déterminer le chemin différentiel des ondes électromagnétiques du dispositif directement vers une base ou via une autre base. Comme les bases connaissent les distances qui les séparent, les distances différentielles mesurées permettent de déterminer la position du dispositif sans que celui-ci soit obligé de faire un calcul. Sa position peut être mise à disposition du dispositif via une communication réseau et donc une durée de latence plus ou moins long. Ceci est donc plutôt adapté aux dispositifs ne nécessitant pas d'information temps réel, par exemple la vérification du stationnement de véhicule en libre-service.

Dans tous ces cas, les avantages de la mise en œuvre de l'invention comportent :

- la mesure est quasi instantanée ;
- une grande précision spatiale, par exemple moins du centimètre pour une fréquence à 2.4 GHz qui est une bande de fréquences libre pour ce type d'applications ;

- la mesure peut se faire au niveau des bases fixes (ce qui est utile pour les opérateurs gérant ou utilisant l'infrastructure) ou d'un dispositif embarqué 10 (ce qui est utile pour le mobile, notamment s'il est autonome, car cela évite les latences de réseau) ;
- il n'y a pas de rupture technologique forte, une simple adaptation des systèmes existants, ce qui facilite le développement industriel et limite les coûts.

La présente invention permet d'obtenir rapidement, de manière fiable et à faible coût, une position centimétrique dans l'environnement, notamment urbain ou intérieur comme dans une gare, par une coopération mobile/infrastructure. Il s'agit de mesurer la durée de vol d'une onde électromagnétique entre des bases fixes 12 dites de référence et un dispositif mobile 10 embarqué dans le mobile. La mesure de la distance du dispositif 10 par rapport à chaque base fixe 12 est fiable et rapide avec une précision meilleure que cinq centimètres (typiquement le centimètre).

Une opération sur la phase, transmission de déphasage dans un message, en figure 2 ou déphasage du signal 31 en retour en figure 3, est effectuée par la base distante 12 qui répond pour affranchir la détermination de la distance de la synchronisation temporelle entre les horloges du dispositif 10 et de cette base 12.

Dans la pratique, il est nécessaire que le dispositif 10 puisse identifier chaque base 12 par rapport à laquelle le dispositif 10 mesure sa distance d, pour déterminer la position du dispositif 10. De même, il est nécessaire d'éviter les collisions descendantes entre les signaux 26 ou 31. Pour ces deux raisons, les signaux échangés entre le dispositif 10 et chaque base 12 sont structurés sous forme de trames 42, 45 et 49, comme illustré en figure 6. Les trames ascendantes 42 portent un message représentant, par exemple :

la fréquence de la porteuse 41,

- un identifiant du dispositif,
- une requête demandant éventuellement une réponse, indiquant éventuellement le mode de réalisation mis en œuvre et
- éventuellement des codes de détection et/ou de correction d'erreur.

Puis le dispositif 10 passe en mode de fonctionnement d'écoute.

Chaque base distante 12 est initialement en mode écoute. Comme décrit en regard des figures 2 et 3, une première base 12 reçoit les trames 42 avec une porteuse 43 déphasée par rapport à la porteuse 41 du fait de la durée de vol des trames entre le dispositif 10 et cette première base 12. Cette première base 12 répond à ce message après un intervalle de temps 44 prédéterminé, dans un canal temporel qui lui est attribué, puis retourne en mode écoute. Une deuxième base 12 reçoit les trames 42 avec une porteuse 47 déphasée par rapport à la porteuse 41 du fait de la durée de vol des trames entre le dispositif 10 et cette deuxième base 12. Cette deuxième base 12 répond à ce message après un intervalle de temps 48 prédéterminé, dans un autre canal temporel qui lui est attribué, puis retourne en mode écoute.

Les trames descendantes 45 et 49 portent un message représentant, par exemple :

- la fréquence de la porteuse 41,
- un identifiant de la base 12,
- la réponse à la requête, par exemple la phase 25,
- l'identifiant du dispositif 10 ayant émis la requête et
- éventuellement des codes de détection et/ou de correction d'erreur.

Un autre avantage de la communication par trames est qu'elle permet de mesurer des décalages de trames, ce qui lève l'indétermination de la mesure de distances d au modulo d'une demi-longueur d'ondes près selon le mode de réalisation, notamment aux grandes distances d. La trame et la porteuse peuvent d'ailleurs être avantageusement émises en même temps en utilisant la propriété d'indépendance des composantes I et Q du dispositif et des bases, comme montré précédemment.

Dans des modes de réalisation, le moyen de détermination de distance du dispositif 10 par rapport à une base fixe 12 est configuré pour déterminer la position de la base 12 à partir de son identifiant, par exemple parce que le dispositif 10 conserve une base de données de positions géographiques des bases 12.

Dans des modes de réalisation, l'identifiant de la base 12 comporte sa position géographique. Le dispositif 10 n'a alors pas besoin de conserver une base de données à jour des positions des différentes bases 12 puisque ces bases 12 lui indiquent leurs positions à jour. Le dispositif 10 est ainsi simplifié et le positionnement plus fiable et plus rapide.

Comme illustré en figure 7, la mesure automatique des distances entre bases 51, représentées par des disques noirs, et la connaissance de quelques points cadastraux 52 représentés par des disques blancs, permet un étalonnage rapide, un contrôle et une détection des incidents.

En effet, un positionnement précis nécessite des points de références tout aussi précis.

Les circuits électroniques, par exemple les circuits 60, des bases fixes 51 et des dispositifs 10 embarqués peuvent être totalement similaires. Ainsi, il est tout aussi simple de déterminer les distances entre les bases fixes 51 et les mobiles qui embarquent un dispositif 10, qu'entre les bases fixes 51. Les distances entre les bases fixes 51 peuvent être régulièrement mesurées et tout écart par rapport à une situation précédente est rapidement détecté et connu, écart par exemple dû à un accident ou un acte de malveillance sur le mat qui maintient la base fixe 51. Le réseau 50 de bases 51 peut alors réagir rapidement en rendant hors service la base fixe 51 correspondante ou en recalculant sa position exacte. Ceci introduit une grande robustesse de ce réseau 50. Également, puisque les distances entre les bases 51 sont connues, cela forme un réseau dense de distances. Le positionnement absolu de ces points, nécessite alors au moins trois points de référence absolue, par exemple produit par des points cadastraux 52 dont les coordonnées géographiques sont parfaitement définies.

On note qu'on reconnaît un dispositif fixe 51 par son identifiant. Pour faire correspondre ce réseau de distance avec des points géographiques, pendant une phase d'étalonnage :

- un agent technique vient placer une base mobile sur un point géographique connu, par exemple un point cadastral ;
- la distance des bases environnantes à ce point de géographique connu contraint le réseau de distance à s'attacher à cette coordonnée connue ;
- l'agent technique fait au moins deux fois cette opération avec d'autres points géographiques connus, de préférence éloignés les uns des autres ;
- il faut un minimum de trois points géographiques connus pour contraindre complètement le réseau de distances, l'utilisation de davantage de points géographiques permet des redondances qui améliorent la précision globale du réseau de bases fixes 51.

L'étalonnage consiste donc à réaliser automatiquement le réseau de maillage entre les bases fixes 51 puis d'ajouter par un agent technique des bases mobiles positionnées sur des points cadastraux 52. Avec quelques opérations d'un agent technique, et donc peu de temps, il est alors possible de contraindre totalement le réseau de distances 50.

L'attribution des canaux temporels en fonctions des distances entre les bases fixes 51, qui peut être automatisée (voir figure 7), réduit fortement le risque de collisions de deuxièmes signaux et de trames descendantes.

Lorsque plus de deux bases 51 sont utilisées, ce qui est nécessaire pour avoir un point géographique, tour à tour une des bases 51 prend le rôle de dispositif et interroge les bases 51 environnantes. Lorsque les distances de ce dispositif 51 avec suffisamment de bases 51 sont connues, ce dispositif 51 calcule sa position géographique et met cette donnée à disposition via une connexion réseau qui utilise directement le système hyperfréquence des bases (il est préférentiellement compatible WIFI dans la bande à 2,4 GHz) ou via une liaison de téléphonie mobile additionnelle, par exemple.

Chaque base 51 peut aussi envoyer les données de distance brute à un système informatique central (non représenté), ce dernier s'occupant de la détermination de la position géographique de chaque base du réseau de bases. Il faut au moins la distance à quatre bases de référence pour déterminer une position géographique. En effet, la distance à une base de référence définit une sphère de positions possibles. Avec deux distances, l'intersection de deux sphères limite les positions possibles à un cercle. Avec trois distances, il ne subsiste que deux points possibles de l'intersection des trois sphères. C'est la quatrième distance qui lève toute ambiguïté. Par ailleurs, il est préférable que les bases fixes ne soient pas toutes alignées parmi les quatre bases considérées afin d'améliorer la précision des intersections entre les sphères.

Dans le cas de mobiles autonomes, le dispositif mobile 10 est autonome de sorte qu'il peut avoir directement accès aux distances et ainsi calculer sa position sans durée de latence supplémentaire.

La précision sur la phase obtenue est inférieure à 10°, de 6,4° dans l'exemple de la figure 5, ce qui permet une estimation de la distance avec une précision de l'ordre de trois à quatre millimètres pour une fréquence de 2,4 GHz avec une portée de cinq mètres en utilisant deux fréquences séparées de 60 MHz, par exemple 2,42 GHz et 2,48 GHz. Au-delà de cette portée de cinq mètres, une détection de retard de trame est utilisée, cela ne nécessite qu'une précision de 15 ns environ, soit une bande passante de 60 MHz qui est directement couverte par les convertisseurs de chaque dispositif.

Ainsi :

- l'étalonnage est simple à mettre en œuvre, rapide et nécessite peu de main-d'œuvre. Il est donc peu couteux ;
- la mesure régulière du réseau de distances permet de contrôler le dispositif et donc de vérifier à tout instant qu'il est opérationnel, de détecter les dysfonctionnements, de corriger les erreurs au fil de l'eau.

Dans des modes de réalisation, pour l'attribution d'intervalles de temps ou des canaux temporels aux bases fixes 51, on prend en compte leur position géographique, de telle manière que deux bases fixes 51 qui échangent des signaux avec la même base fixe 51 n'aient pas le même intervalle de temps attribué entre elles et avec ladite même base fixe. En figure 7, les références S « X » indiquent des numéros « X » de canaux temporels compris entre 1 et 8 attribués ainsi (seule une partie des canaux temporels attribués aux bases est représentée). Bien entendu, si on dispose d'un plus grand nombre de canaux temporels, par exemple 16, on peut étendre la contrainte à plus d'un rang de communication entre bases. Par exemple deux bases fixes 51 qui échangent, directement ou avec une base fixe intermédiaire, des signaux avec la même base fixe 51 n'ont pas le même intervalle de temps attribué entre elles ni avec ladite même base fixe ni avec les bases intermédiaires.

Un exemple de réalisation d'un circuit électronique d'un dispositif ou d'une base objet de l'invention est illustré en figure 8. Ce circuit comporte une tête d'émission/réception IQ hyperfréquence fonctionnant par exemple dans la bande ISM de 2,4 GHz. Cette tête d'émission/réception comporte un oscillateur, aussi appelé horloge 72, un déphaseur quart d'onde 73, des filtres passe-bas 66, des mélangeurs 67, un additionneur 74 et des amplificateurs 68 et 69. Une antenne d'émission 70 et une antenne de réception 71 complètent la partie analogique. La partie numérique comporte des convertisseurs numérique/analogique 64 et 65 et analogique/numérique 62 et 63 et une unité de calcul 61 pour traiter les signaux et la communication entre les dispositifs et les bases et entre les bases. L'unité de calcul 61 lit les points IQ en provenance du module de réception, effectue des calculs et écrit des points IQ dans le module d'émission. L'unité de calcul 61 comporte aussi des mémoires (non représentées) de programmes et de données, notamment de motifs décrits plus loin.

Dans un exemple d'implémentation de ce circuit, la tête hyperfréquence est constituée d'un circuit ADRF6720 (marque déposée d'un modulateur en quadrature à large bande (700 MHz à 3 GHz) intégrant un oscillateur fractionnaire (PLL/VCO)) pour l'émission et d'un circuit ADRF6820 (marque déposée d'un démodulateur en quadrature à large bande (695 MHz à 2700 MHz) intégrant un oscillateur fractionnaire (PLUVCO)) pour la réception. Ces deux circuits utilisent le même oscillateur local 72 pour l'émission et la réception. Bien sûr tout autre circuit permettant l'accès aux signaux IQ au moins après démodulation ou numérisation est utilisable. Également, une alimentation électrique (non représentée), sur batterie ou sur secteur, est nécessaire pour que le circuit fonctionne. On remarque que ce dispositif est tout à fait conventionnel, les signaux IQ sont simplement rendus accessibles au niveau de l'unité de calcul 61 pour effectuer les opérations nécessaires à la détermination de la phase et donc de la distance, puis de la position.

Dans une phase simple de communication entre deux circuits 60 A (d'un dispositif) et B (d'une base) pour déterminer la distance qui les sépare :

- le circuit B est en mode d'écoute et le circuit A est en mode d'émission :
- le circuit A, en mode d'émission, émet une fréquence fixe pendant un temps court, typiquement une microseconde, puis un message, typiquement un ordre, l'initiation d'une mesure de distance par exemple, et une donnée, l'identifiant du circuit A, par exemple ;
- le circuit B, en mode d'écoute reçoit le signal, enregistre les points (I,Q) et décode le message ;
- dans le cas d'une mesure de distance selon le mode de réalisation illustré en figure 3, le circuit B, qui était en mode d'écoute passe en mode d'émission puis envoie un signal composé des points (I,Q) précédemment reçus ainsi qu'un message de réponse, par exemple l'identifiant du circuit B ;
- simultanément, le circuit A, qui était en mode d'émission, passe en mode d'écoute et attend la réponse;
- lorsque le circuit A reçoit la réponse, il enregistre les points (I,Q) du signal reçu et détermine la phase puis la distance séparant les circuits A et B, modulo la longueur d'onde ;
- pour lever l'ambiguïté liée au modulo de la longueur d'onde la procédure recommence alors avec une autre fréquence f ou un décalage de trames est mesuré ;
- si au moins trois distances avec trois circuits B ont été ainsi obtenues, le circuit A détermine sa position géographique.

Dans le circuit B, l'unité de calcul 61 constitue un moyen de mesure d'un premier déphasage entre le signal oscillant provenant de la première horloge du circuit A dans le signal 22, d'une part, et le signal oscillant provenant de la deuxième horloge du circuit B, d'autre part.

Dans le circuit A, l'unité de calcul 61 constitue un moyen de mesure d'un deuxième déphasage entre le signal oscillant de la première horloge du circuit A et le signal oscillant provenant du circuit B et un moyen de détermination de la distance du dispositif comportant le circuit A par rapport à la base comportant le circuit B, en fonction du premier déphasage et du deuxième déphasage.

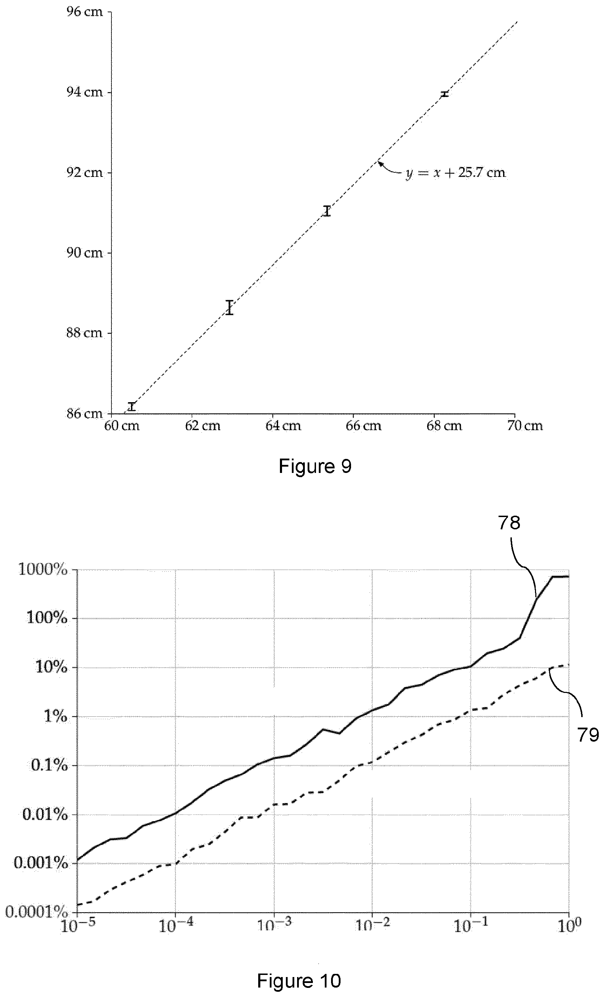

La figure 9 donne un graphe de mesures expérimentales pour différentes distances avec les barres d'erreur pour un dispositif et une base comprenant les circuits précédemment indiqués et utilisant les fréquences 2,4 GHz et 2,46 GHz pour lever l'indétermination de modulo. L'abscisse du graphe correspond à la distance réelle et l'ordonnée correspond à la distance calculée à partir des durées de vol issues des deux fréquences. Dans cet exemple, la relation entre la distance calculée y et la distance réelle x est y = x + 25,7 centimètres.

Le décalage systématique de 25,7 centimètres correspond au temps mis par les composants pour amplifier et démoduler le signal. Cette durée étant fixe, il est facile de l'étalonner et de la soustraire systématiquement. On note que la durée de retournement n'a aucune influence sur la détermination de la distance si les fréquences du dispositif et de la base sont égales. Dans le cas où ces fréquences ne sont pas parfaitement égales (figure 5), il est nécessaire que l'acquisition du signal (22 du côté de la base distante et 27 ou 33 du côté du dispositif) se fasse avec une durée contrôlée similaire entre le moment où le signal arrive sur l'antenne et le moment où celui-ci est échantillonné par l'unité de calcul. La précision de l'estimation de la distance dans la figure 9 est comprise entre 1 et 3,25 millimètres, selon la distance.

La figure 10 représente l'erreur d'estimation du décalage en points de deux motifs périodiques permanents sur 64 points en fonction du niveau de bruit par rapport au signal, calcul fait sur une période du motif, erreur 78, et sur 100 périodes du motif, erreur 79. Cette erreur est mesurée par transformée de Fourier rapide (FFT) permettant une meilleure précision de positionnement qu'une corrélation. Dans ce cas d'utilisation d'un motif périodique permanent pour agrandir la plage de distances accessibles, la figure 10 montre ainsi l'influence du bruit pour une estimation du décalage lorsque le motif périodique permanent est composé de 64 points, ce motif de 64 points étant calculé à partir de la transformée de Fourier d'un spectre de 64 points, dont les 31 fréquences sont d'amplitude constante et de phase aléatoire. L'échantillonnage du motif est ici à 20 MHz et l'erreur d'estimation du décalage est inférieure à 1 % du pas d'échantillonnage pour un bruit de 0,63 % du signal lorsqu'une seule période du motif périodique permanent est considérée et de 6,3 % du signal lorsque 100 périodes du signal périodique permanent sont considérées. L'erreur augmente ainsi proportionnellement au niveau de bruit par rapport au signal et diminue proportionnellement à la racine carrée du nombre de périodes considérées.

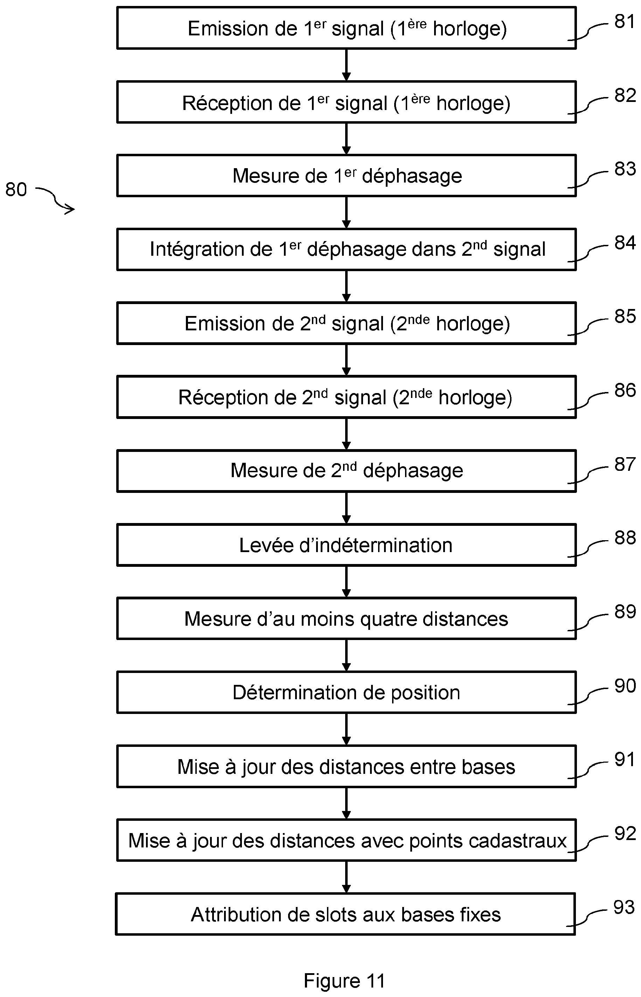

La figure 11 décrit les étapes d'un mode de réalisation 80 du procédé objet de l'invention. Au cours d'une étape 81, le circuit A émet un premier signal 21. Au cours d'une étape 82, le circuit B reçoit le signal 22. Au cours d'une étape 83, le circuit B détermine le déphasage entre le signal 22 et le signal de son horloge 72. Au cours d'une étape 84, le circuit B intègre le premier déphasage dans le signal de réponse 26 ou 31, selon les modes de fonctionnement (voir figures 2 et 3). Au cours d'une étape 85, le circuit B émet le signal de réponse. Au cours d'une étape 86, le circuit A reçoit le signal de réponse. Au cours d'une étape 87, le circuit A mesure le déphase entre le signal reçu et son horloge 72. Optionnellement, au cours d'une étape 88, le circuit A effectue une levée d'indétermination de distance. Au cours d'une étape 89, le circuit A détermine s'il a obtenu au moins quatre distances avec quatre bases différentes. Si oui, au cours d'une étape 90, le circuit A accède à la position des bases par rapport auxquelles il a obtenu sa distance et détermine sa position géographique. On observe que cette position peut aussi dépendre d'informations reçues d'une centrale inertielle solidaire du circuit A et peut utiliser des algorithmes pour déterminer la position la plus probable, dans le cas où au moins cinq distances avec des bases fixes ont été obtenues.

Au cours d'une étape 91, par exemple pendant des périodes de faible trafic, notamment la nuit, ou lors de la détection d'un choc révélé par un capteur inertiel (non représenté) inclus dans une base et qui pourrait être à l'origine du déplacement inopiné de cette base, les circuits B des bases réalisent, entre elles, les étapes 81 à 90 pour mettre à jour leurs positions respectives. Au cours d'une étape 92, périodique, par exemple annuelle, les circuits B des bases réalisent, entre elles et avec des bases mobiles positionnées sur des points cadastraux, les étapes 81 à 90 pour mettre à jour leurs positions respectives. Au cours d'une étape 93, on attribue des intervalles de temps (canaux temporels) aux bases fixes en fonction de leurs positions respectives, pour réduire les risques de collisions descendantes.

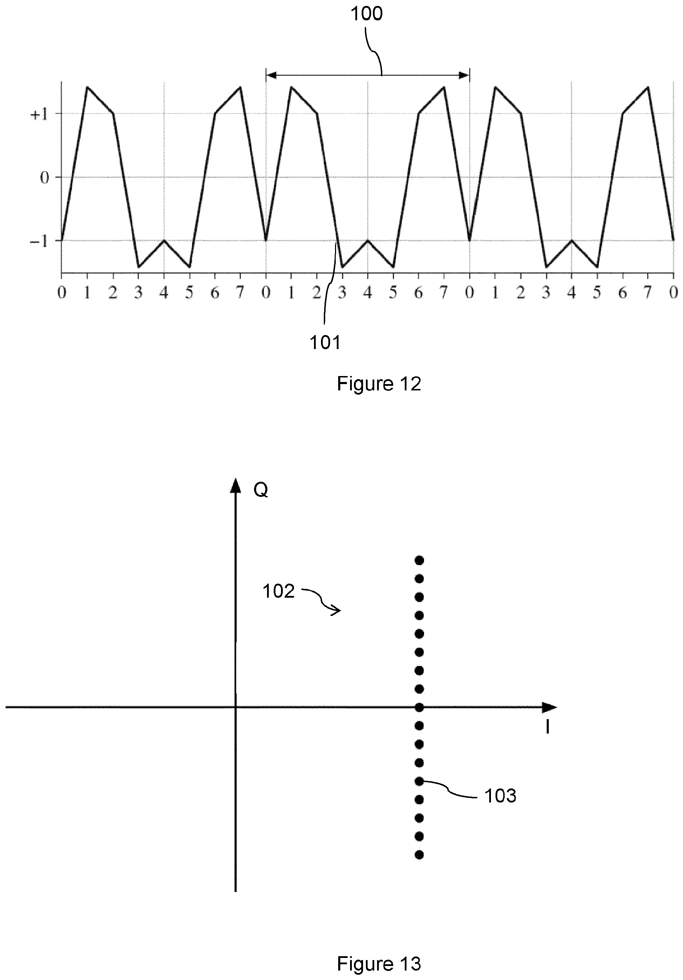

On observe, en figure 12, un exemple de motif 101 comportant huit points, répété trois fois, sans intervalle de temps entre les répétitions.

Pour se positionner, le dispositif 10 envoie une requête vers les bases 12, requête comportant préférentiellement au moins un motif périodique complet 101, par exemple entre une et deux périodes 100 de ce motif 101. Une requête comportant plus d'un motif périodique complet 101 est préférable. En effet, à la réception, l'échantillonnage est complètement asynchrone et il est donc possible de perdre un point 103 du signal envoyé. En envoyant au moins un point 103 de motif 101 en plus d'un motif complet 101, on garantit l'acquisition d'un motif complet 101. Or, l'acquisition d'une période complète 100 permet de faire des calculs de décalage temporel plus précis que dans le cas d'une simple corrélation.

Dans des modes de réalisation, la période des compteurs est supérieure au double de la durée maximale de vol correspondant à une distance maximale prédéterminée entre le dispositif 10 et une base 12 susceptible de répondre à une requête de ce dispositif 10.

On note que, pour remplir cette condition, qui évite un modulo de la moitié de la période du compteur multipliée par la vitesse de propagation des signaux dans la mesure de distance, on peut prévoir des motifs 101 de longueur fixe ou de longueur variable, par exemple par complément de motifs conservés en mémoire par un segment de motif identique (non représenté) pour tous les dispositifs 10 et toutes les bases 12.

Le dispositif 10 et chaque base 12 comportent, chacun, un compteur qui parcourt, de manière cyclique, n positions d'un pointeur pointant sur des espaces de mémoire où peuvent être enregistrées et lues des valeurs de points successifs d'un motif. Ces pointeurs sont remis à zéro lorsque le dernier échantillon ou point du motif a été lu. La période de parcours des n positions du pointeur est sensiblement égale pour le dispositif 10 et les bases 12, sans que ces compteurs et pointeurs ne soient synchronisés.

On décrit, ci-dessous, différents modes de réalisation de l'invention mettant en œuvre ces motifs 101. Dans les modes de réalisation référencés A/ et B/ ci-dessous, il n'est pas nécessaire que la base 12 ait le même motif répétitif que le dispositif 10, puisque la base 12 se comporte en répétiteur en réémettant le motif 101 qu'elle reçoit.

A/ Dans des modes de réalisation, à réception du motif périodique permanent émis par un dispositif 10, une base 12 l'enregistre sur au moins une période puis le réémet, dans l'ordre de réception, vers le dispositif 10, après un nombre entier donné de périodes 100 du motif périodique 101.

Ce nombre entier dépend de la durée de retournement et donc de la vitesse de calcul de la base 12 et aussi des canaux temporels disponibles pour la réponse (plusieurs bases peuvent répondre à une même requête). Ainsi, à chaque période 100, c'est comme si le compteur revenait au point de départ, la valeur du nombre donné n'ayant pas d'importance, pourvu qu'il soit entier. Ce délai avant réémission doit néanmoins être compatible avec les dérives des fréquences, par exemple pour une seconde avec une fréquence de 20MHz et un motif de 64 points, le nombre entier maximal est de 312500. Le nombre entier utilisé est préférentiellement celui qui correspond au premier canal temporel disponible.

Lorsque le dispositif 10 reçoit le motif réémit par la base 12, il compare (par exemple, corrélation ou transformée de Fourier) ce motif avec son propre motif périodique permanent et en déduit le décalage temporel entre les deux motifs, émis et reçu, décalage temporel proportionnel à la distance entre le dispositif 10 et la base 12 et inversement proportionnel à vitesse des ondes électromagnétiques.

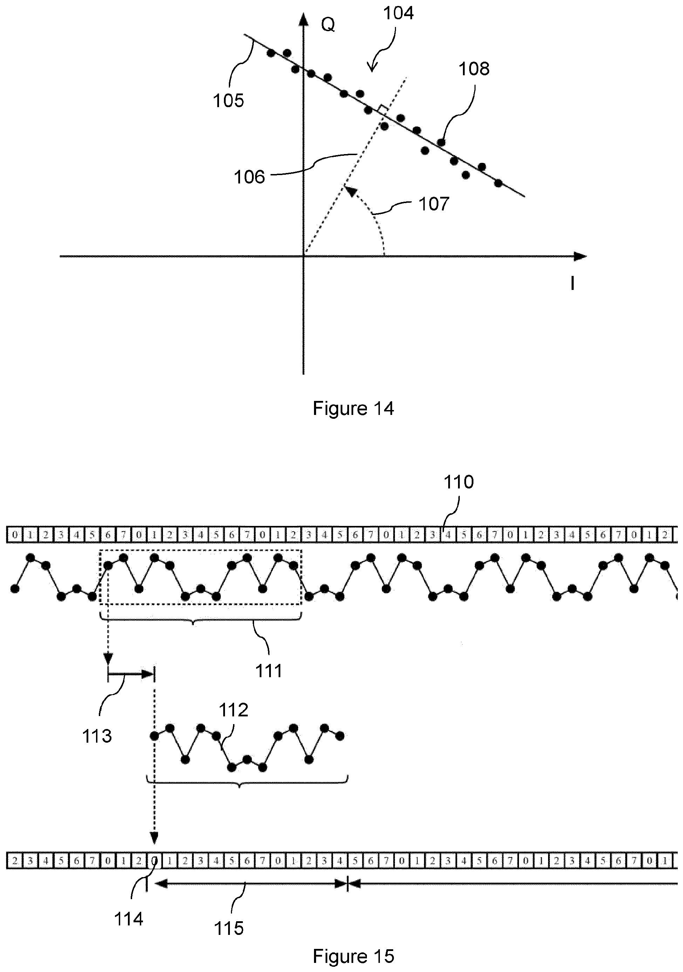

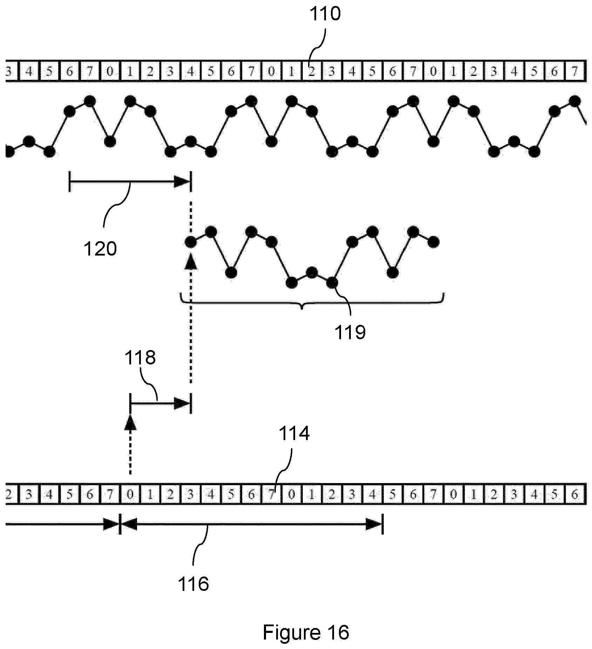

B/ Dans des modes de réalisation, à réception du motif périodique permanent émis par un dispositif 10, une base 12 l'enregistre sur au moins une période entière 100, puis le réémet dans l'ordre de réception à partir d'un $n^{ième}$ échantillon, et, après la réémission du dernier échantillon reçu, c'est le premier échantillon reçu qui est réémis jusqu'au n moins-un$^{ième}$. La réémission se fait ainsi après un nombre entier et une fraction de période du motif périodique, cette fraction correspondant au rapport du nombre n sur le nombre d'échantillons dans une période 100 du motif périodique 101 permanent, par exemple huit dans le motif 101 représenté en figure 12. Les figures 15 et 16 correspondent à ces modes de réalisation.

La mise en œuvre de la fraction de période évite de répondre à un instant donné par un nombre entier de période du motif 101. Par exemple, si un canal temporel de réponse n'est pas bien calé par rapport à la durée de retournement de la base 12, celle-ci peut ajuster le moment de sa réponse non pas en attendant un nombre entier de période mais simplement une fraction de ce nombre.

Lorsque le dispositif 10 reçoit le motif réémit par la base 12, il compare ce motif avec son propre motif périodique 101 permanent et en déduit le décalage temporel entre les deux motifs, émis et reçu, décalage temporel proportionnel à la distance entre le dispositif 10 et la base 12 et inversement proportionnel à vitesse des ondes électromagnétiques.

C/ Dans des modes de réalisation, à réception du motif périodique permanent émis par un dispositif 10, une base 12 compare ce motif reçu avec son propre motif périodique permanent pour en déduire un premier décalage temporel entre le dispositif et la base. Une information représentative de ce premier décalage est ensuite transmise, sous forme de données numériques, par la base 12 au dispositif 10, avec au moins une période du motif périodique 101 permanent de la base 12. A réception du motif périodique permanent émis par la base 12, le dispositif 10 compare ce motif reçu avec son propre motif périodique permanent pour en déduire un deuxième décalage temporel. En additionnant ces deux décalages temporels, le premier étant lu dans les données transmises, pour s'affranchir de la synchronisation absolue entre le dispositif 10 et la base 12, le dispositif 10 en déduit la distance entre le dispositif 10 et la base 12.

D/ Dans des modes de réalisation, à réception du motif périodique permanent émis par le dispositif 10, la base 12 l'enregistre dans une mémoire, puis le lit par l'intermédiaire du pointeur. A la lecture d'un point du motif 101, le dispositif 10 l'émet à destination de la base 12 et la base 12 l'émet à destination du dispositif 10. Au moment de l'envoi d'au moins une période du motif périodique permanent par le dispositif 10, ce dernier met son pointeur à zéro et lit les données à l'aide de son pointeur et les met à disposition de son système d'émission IQ, par exemple sur la voie Q, la voie I restant constante pour une mesure de phase, comme illustré en figure 13.

Au moment où une base 12 détecte la réception d'une requête, elle met la valeur de son propre pointeur au moment de la réception du premier échantillon IQ en mémoire, puis les réémet cycliquement en commençant par l'échantillon correspondant à la valeur du pointeur au moment de la réémission. Lorsque le dispositif 10 détecte le signal réémit par la base 12, il peut alors détecter la phase par la rotation du plan IQ (figure 14), puis, une fois réaligné, comparer le motif renvoyé avec son propre motif périodique permanent et en déduire le décalage temporel entre les deux motifs 101.

La mesure du déphasage dans le plan IQ permet une amélioration de la précision de la distance estimée par le motif, notamment dans le cas de bruit important dans les communications hertziennes.

Dans chacun des modes de réalisation décrits ci-dessus, la séquence d'étapes est, en variante, répétée pour utiliser simultanément ou successivement deux canaux de communication distincts, notamment lorsque le bruit de communication est important.

On observe, en figure 12, une période 100 de répétition d'un motif 101. Une horloge dans chaque dispositif et dans chaque base assure une synchronisation d'un pointeur sur une mémoire de motif pour parcourir ce motif 101 dans la même période 100.

On observe, en figure 13, dans le plan IQ, un signal 102 émis représentatif d'un motif. Les différentes valeurs possibles du motif sont représentées par des points 103.

On observe, en figure 14, dans le plan IQ, un signal 104 reçu, correspondant au signal émis 102. Ce signal reçu 104 comporte des points 108 pour chaque point 103 du motif émis 102. Le récepteur de ce signal, base pour la requête et dispositif pour la réponse à la requête, détermine un ajustement linéaire 105 des points reçus, puis une droite 106 passant par l'origine du plan IQ et perpendiculaire à la droite d'ajustement linéaire 105, puis la phase 107 de la droite 106. La différence entre la phase 107 à la réception et la phase (nulle dans l'exemple de la figure 13) correspond au déphasage du signal entre son émission et sa réception, mesurer par l'intermédiaire de pointeurs eux-mêmes déphasés. La mise en œuvre de l'invention permet de s'affranchir de ce déphasage des pointeurs pour mesurer le déphasage uniquement dû à la durée de vol (en anglais « time of flight » ou TOF) des signaux aller (du dispositif vers la base) et retour (de la base vers le dispositif).

Ainsi, lorsque l'émetteur (qui peut être le dispositif 10 ou la base 12, selon le sens de communication) envoie sur la voie I une constante et sur la voie Q au moins une période de son motif périodique permanent, dans le diagramme IQ cela se traduit par une série de points alignés verticalement puisque l'abscisse I est une constante alors que l'ordonnée Q varie. Lors de l'émission, le retard pris par la propagation fait tourner le plan IQ, d'un tour complet par longueur d'onde. Au moment de la réception, les points IQ réceptionnés sont donc alignés, dans le plan IQ du récepteur, mais sur une droite décalée de la verticale avec un angle qui correspond à la fraction de longueur d'onde qui sépare l'émetteur du récepteur. Une façon simple de déterminer les informations et donc de faire, par exemple après une régression ou un ajustement linéaire 105, une estimation de la pente de la droite sur laquelle sont alignés les points IQ reçus. De cette droite 105, on tire la distance à l'origine du plan IQ correspondant à la constante I envoyée et qui donne un point de référence sur la droite, et l'angle de rotation dont la cotangente est simplement le coefficient directeur de la droite.

Le déphasage ainsi obtenu apporte une information fine de la distance entre l'émetteur et le récepteur.

Bien entendu, il n'est pas nécessaire que la valeur portée par la voie I soit constante et que le motif 101 soit porté par la voie Q. Le signal émis peut, par exemple, être déphasé à l'émission comme illustré en regard de la figure 14, la connaissance de la phase à l'émission suffisant au dispositif pour déterminer le déphasage total du à la durée de vol des signaux aller et retour. La mesure de la phase sur l'ensemble du motif, après ajustement linéaire 105, permet une amélioration de la précision de la distance estimée, notamment en cas de bruit trop important.

Les figures 15 et 16 illustrent une séquence complète de l'aller-retour avec un motif de huit échantillons. L'utilisation optionnelle de la mesure de déphasage de porteuse pour augmenter la précision de la détermination de distance n'est pas détaillée de nouveau.

On observe, en figure 15, la transmission, c'est-à-dire l'émission (en haut) et la réception (en bas) d'un signal de requête modulé par un motif 101. La position 110 du pointeur du dispositif 10 est représentée dans la ligne la plus haute. Ce pointeur parcourt de manière cyclique les huit valeurs (indicées 0 à 7) du motif 101 conservé en mémoire. Lors de l'émission du signal, les valeurs du motif 101 lues pendant au moins une période 100, aux positions de la mémoire indiquées par le pointeur sont utilisées pour moduler le signal émis 111. Du fait de la distance entre le dispositif 10 et la base 12, le signal 112 reçu par la base 12 est décalé, dans le temps, d'un retard 113, par rapport au signal émis. On suppose, dans la suite de la description de la figure 15, que la base 12 met à zéro son pointeur à réception du premier échantillon représentatif d'un point du motif porté par le signal reçu 112, comme illustré par la valeur de pointeur 114. Bien entendu, comme exposé en regard de la figure 16, il n'est pas nécessaire que le pointeur soit remis à zéro. Par exemple, la position du pointeur à réception du premier échantillon peut être mémorisée par la base 12 et servir de position de départ pour renvoyer le motif à destination du dispositif.

La durée 115 est celle d'échantillonnage du signal reçu 112 et de mise en mémoire des valeurs de motif qu'il porte.

On observe, en figure 16, la transmission, c'est-à-dire l'émission (en bas) et la réception (en haut) d'un signal de réponse 119 à la requête 112 illustrée en figure 15.

La base 12 commence l'émission d'un motif après un nombre entier de périodes 100, à compter de la réception du premier échantillon du signal reçu 112, donc quand le pointeur 114 de la base, en bas de la figure 16, repasse :

- à la valeur « 0 » s'il y a eu remise à zéro de ce pointeur à réception de ce premier échantillon du motif ou
- à la valeur qu'avait ce pointeur à réception de ce premier échantillon.

Les points du motif 111, au cours d'une au moins une période 100, sont émis par la base 12 à destination du dispositif 10. Du fait de la distance entre la base 12 et le dispositif 10, le signal 119 reçu par le dispositif est décalé, dans le temps, d'un retard 118 égal au retard 113, par rapport au signal émis par la base. En mesurant le décalage temporel entre le motif lu avec le pointeur 110 du dispositif 10 et le motif 119 reçu de la base 12, le dispositif 10 détermine la somme des durées de vol des signaux aller et retour et peut en déduire la distance entre le dispositif 10 et la base 12.

On note que le motif émis périodiquement n'a pas besoin d'être commun à tous les dispositifs 10 et toutes les bases 12, ni même d'être permanent au-delà de la durée de détermination de la distance entre le dispositif 10 et la base 12.

En particulier, dans les modes de réalisation A et B, il n'est pas nécessaire que le motif soit connu de la base 12 qui sert de répétiteur.

En revanche, la durée entre deux points d'un motif 101 doit être connue de la base 12 pour que les échantillons du signal reçu correspondent à ces points.

Les points du motif pointés par le compteur du dispositif 10 doivent être connues de la base 12 si elle procède à une mesure de décalage ou de déphasage.

Comme on le comprend à la lecture de la description qui précède, un système 9 de positionnement d'un dispositif 10 comporte ce dispositif 10 et une pluralité de bases fixes 12. Le dispositif 10 comporte un émetteur configuré pour émettre une requête comportant au moins un motif de points dont les valeurs sont lues avec le pointeur du dispositif parcourant des positions d'une mémoire de motif, l'émetteur du dispositif modulant en amplitude et/ou en phase une porteuse avec les valeurs de points du motif successivement lues.

Chaque base 12 comporte un émetteur configuré pour répondre à la requête avec une réponse qui dépend des modes de réalisation A à D décrits ci-dessus.

Dans les modes de réalisation A et B, la réponse répète le motif reçu par la base 12 depuis le dispositif 10, le pointeur de la base parcourant des positions de mémoire pour y inscrire les valeurs de points de motif reçues, puis parcourant ces positions de mémoire pour y lire les valeurs de points de motif à émettre, chaque point du motif étant ainsi temporellement décalé, par rapport à l'instant de sa réception par la base, d'un multiple de fois la période du compteur de la base.

Dans le mode de réalisation C, la réponse est représentative d'un premier décalage temporel de motif, mesuré par la base 12, entre le motif reçu et un motif identique conservé en mémoire de la base 12, dont les valeurs sont parcourues par le pointeur de la base 12. Ce premier décalage temporel est, par exemple, inséré dans les données accompagnant le motif émis, dans la trame constituant la réponse. Les valeurs des points d'un motif de réponse sont successivement lues en des positions de mémoire parcourues par le pointeur de la base, à partir d'une position connue par le dispositif.

L'émetteur de la base 12 module, elle aussi, en amplitude et/ou en phase, une porteuse avec les valeurs de points du motif successivement lues.

Le dispositif 10 comporte, aussi :

- un moyen de mesure 61 d'un deuxième décalage temporel de motif entre les valeurs de points de motif reçues dans chaque réponse et les valeurs conservées en mémoire du dispositif 10 dans les positions successivement parcourues par le pointeur du dispositif 10.
- un moyen de détermination 61 de la distance entre le dispositif et chaque base en fonction, respectivement :
  Dans les modes de réalisation A et B, du décalage total de motif entre le motif initialement émis par le dispositif 10 dans la requête et le motif répété par la base 12 et reçu par le dispositif 10 depuis cette base 12.

Dans le mode de réalisation C, du deuxième décalage de motif mesuré par le dispositif 10 et du premier décalage de motif mesuré par la base 12.

Le dispositif 10 comporte aussi un moyen 61 de détermination de la position du dispositif en fonction d'une position connue de chaque base fixe ayant répondu et de la distance par rapport à chacune de ces bases, déterminées par le moyen de détermination.

La précision du système de positionnement basé uniquement sur les mesures de décalage de motifs est de l'ordre du double de la durée entre l'émission de deux points d'un motif, multipliée par la vitesse de propagation du signal.

Dans des modes de réalisation préférentiels, le dispositif 10 comporte un moyen de mesure du déphasage de la porteuse d'un signal reçu par rapport à la phase d'un signal sinusoïdal généré par une horloge du dispositif 10. Si une base 12 comporte un moyen de mesure de décalage de motif (modes de réalisation C), cette base 12 comporte préférentiellement aussi, un moyen de mesure du déphasage de la porteuse d'un signal reçu de la part du dispositif par rapport à la phase d'un signal sinusoïdal généré par une horloge de la base 12.

Ce déphasage peut être mesuré comme décrit en regard des figures 1 à 11.

Le moyen de détermination de distance du dispositif 10 additionne le déphasage total mesuré pour un aller et retour de signal, au décalage total mesuré pour cet aller et retour, pour déterminer la distance du dispositif à chaque base.

Comme exposé ci-dessus, dans des modes de réalisation, le signal émis par le dispositif 10 et par chaque base 12 est en quadrature IQ. Pour au moins un déphasage prédéterminé de la porteuse de ce signal, le signal sur la voie I est constant et le signal sur la voie Q porte la modulation en amplitude du motif émis par le dispositif. Préférentiellement, comme illustré en figure 13, le déphasage prédéterminé est nul.

Préférentiellement, pour mesurer le premier et le deuxième décalages, la base et le dispositif comportent un moyen de réalisation d'un ajustement linéaire des points du motif reçu dans le plan IQ. Le déphasage mesuré est alors égal à la différence entre

- l'angle entre la verticale dans ce plan et la droite obtenue par ajustement linéaire, et
- ledit déphasage prédéterminé (nulle dans le cas représenté en figure 13).

Le décalage mesuré servant à la mesure de distance entre le dispositif et la base est alors égal au décalage de motif additionné au déphasage ainsi mesuré.

Dans des modes de réalisation :

c) chaque base comporte un moyen de réalisation d'un ajustement linéaire des points du motif reçu dans le plan IQ, et un moyen de mesure de déphasage, ce déphasage mesuré étant égal à la différence entre

- l'angle entre la verticale dans ce plan et la droite obtenue par ajustement linéaire, et
- ledit déphasage prédéterminé ;

l'émetteur de chaque base étant configuré pour émettre un signal IQ déphasé, par rapport au signal reçu, en négatif, de deux fois le déphasage mesuré de telle manière que la phase du signal émis par la base est en phase avec le signal émis par le dispositif ;

d) le dispositif comporte un moyen de réalisation d'un ajustement linéaire des points du motif reçu dans le plan IQ, et un moyen de mesure de déphasage, ce déphasage mesuré étant égal à la différence entre

- l'angle entre la verticale dans ce plan et la droite obtenue par ajustement linéaire, et
- ledit déphasage prédéterminé ;

le décalage total mis en œuvre par le dispositif pour mesurer la distance étant la somme du décalage de motif total additionné au déphasage mesuré par le moyen de mesure du dispositif.

Grâce à chacune de ces dispositions, la précision du système de positionnement est de l'ordre du double de la capacité de discrimination d'un déphasage d'une pluralité de n points de motif colinéaires dans le plan IQ, multiplié par la vitesse de propagation du signal. Du fait de la pluralité de n points dans le motif, cette précision est encore supérieure à la précision obtenue par la mesure de déphasage d'un signal sinusoïdal simple.

Dans des modes de réalisation, les motifs émis par tous les dispositifs et par toutes les bases sont identiques. Ainsi, la mise en œuvre de l'invention est facilitée au niveau des moyens de mesure de décalage temporel de motif.

Dans des modes de réalisation, les motifs émis par au moins deux dispositifs différents sont différents, le signal émis par chaque dispositif comportant des données identifiant ou représentant le motif émis par ce dispositif. Ainsi, une base peut identifier le dispositif ou le dispositif lui-même peut identifier son propre motif pour la mesure de décalage temporel de motif.

Dans des modes de réalisation, les motifs émis par au moins deux bases différentes sont différents, le signal émis par chaque base comportant des données identifiant ou représentant le motif émis par cette base. Le dispositif peut ainsi identifier chaque base avec le motif qu'il reçoit.

Dans des modes de réalisation, chaque signal émis par une base comporte un identifiant de cette base, le moyen de détermination du dispositif étant configuré pour déterminer la position de cette base à partir de son identifiant.

Dans des modes de réalisation, l'identifiant de la base comporte sa position géographique.

Selon un deuxième aspect, la présente invention vise un dispositif d'un système objet de l'invention.

Selon un troisième aspect, la présente invention vise une base d'un système objet de l'invention.

Dans des modes de réalisation particuliers de cette base, cette base est configurée pour se comporter en dispositif vis-à-vis d'autres bases pour vérifier son positionnement, l'émetteur de cette base étant configuré pour émettre un message de déplacement au cas où la position déterminée est différente d'une position de cette base précédemment mémorisée.

Ainsi, les bases peuvent vérifier et, le cas échéant, mettre à jour leurs positions cadastrales. Les avantages sont que :

- l'étalonnage géographique du réseau de distances entre les bases est simple à mettre en œuvre, rapide et nécessite peu de main-d'œuvre. Il est donc peu couteux ;
- la mesure régulière du réseau de distances permet de le contrôler et donc de vérifier à tout instant qu'il est opérationnel, de détecter les dysfonctionnements et de corriger rapidement les erreurs.

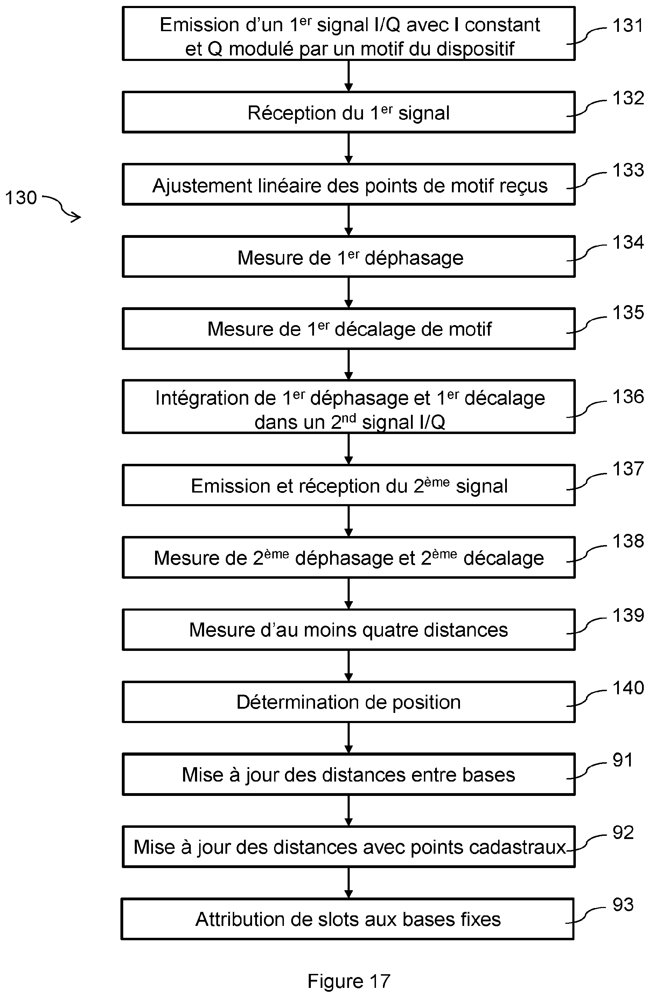

On observe, en figure 17, un procédé de positionnement d'un dispositif 10 dans un système comportant ce dispositif 10 et une pluralité de bases fixes 12.
Ce procédé 130 comporte :

- une étape 131 d'émission, par le dispositif d'une requête comportant au moins un motif de points dont les valeurs sont lues avec le pointeur du dispositif parcourant des positions d'une mémoire de motif, l'émetteur du dispositif modulant une porteuse avec les valeurs de points du motif successivement lues,
- une étape 132 de réception du premier signal par une base 12,
- une étape 137 d'émission, par chaque base recevant ladite requête, d'une réponse :

    - une étape 138 de mesure, par le dispositif 10 d'un deuxième décalage temporel de motif entre les valeurs de points de motif reçues dans chaque réponse et les valeurs conservées en mémoire du dispositif 10 dans les positions successivement parcourues par le pointeur du dispositif,
    - une étape 139 de détermination, par le dispositif, de la distance entre le dispositif et au moins quatre bases 12, et
    - une étape 140 de détermination de la position du dispositif, par le dispositif, en fonction d'une position connue de chaque base fixe ayant répondu et de la distance par rapport à chacune de ces bases, déterminées par le moyen de détermination.

Préférentiellement, le premier signal est en quadrature et tel que représenté en figure 13.
Préférentiellement :

- au cours d'une étape 133, un ajustement linéaire tel que décrit ci-dessus, notamment en regard de la figure 14, est réalisé par la base 12,
- au cours d'une étape 134, une mesure de premier déphasage est effectuée,
- au cours d'une étape 135, une mesure du premier décalage est effectuée par la base 12,
- au cours d'une étape 136, des données représentatives du déphasage et du décalage mesurés sont intégrées dans le deuxième signal correspondant à la réponse émise par la base 12 à destination du dispositif 10,
- l'étape 138 comporte une mesure de déphasage après ajustement linéaire.

Le procédé 130 correspond au mode de réalisation C. En variante correspondant aux modes de réalisation A et B, une base 12 se comporte comme répétiteur du motif reçu depuis le dispositif 10. La base 12 n'a, alors, pas besoin de mesurer le décalage de motif. Elle peut, néanmoins :

- mettre la porteuse du signal de réponse en phase avec le motif reçu et transmettre une mesure de déphasage entre la porteuse du motif reçu et son horloge ou
- déphaser la porteuse du signal de réponse pour que cette porteuse soit synchronisée avec la porteuse du signal de requête.

Ces deux alternatives permettent au dispositif de mesurer le déphasage total dû à l'aller de la requête et le retour de la réponse, et ainsi affiner la mesure de distance entre le dispositif 10 et la base 12.
On note que le procédé peut comporter, à la fois, une répétition, par la base, du motif qu'elle reçoit et la transmission d'une mesure de décalage effectuée par cette base.
Les étapes 91 à 93 ont déjà été décrites en regard de la figure 11. Les étapes 91 et 92 peuvent mettre en œuvre des mesures de distance basées sur les décalages de motif et/ou sur les déphasages de porteuses et/ou de motifs.
La présente invention vise aussi l'utilisation du procédé et/ou du dispositif objets de l'invention pour guider un véhicule terrestre ou aérien, guider un piéton, une personne mal voyante ou à mobilité réduite dans un environnement extérieur ou intérieur, géolocaliser des éléments dans l'environnement extérieur ou intérieur, signaler un défaut de stationnement d'un véhicule en libre-service, déterminer la position et l'orientation d'un système de visualisation comportant plusieurs dispositifs à des fins de réalité augmentée pour des applications de génie civil, de loisir, de tourisme, déterminer des gestes, par exemple pour une interface gestuelle ou capter des mouvements corporels (en anglais « motion capture »).

**Revendications**

1. Système (9) de positionnement d'un dispositif (10), comportant ledit dispositif et une pluralité de bases fixes (12), le dispositif comportant un compteur parcourant, de manière cyclique, n positions de pointeur (110) et chaque base comportant un compteur parcourant, de manière cyclique, n positions de pointeur (114) pendant une période sensiblement égale à la période de parcours des n valeurs par le compteur du dispositif, système **caractérisé en ce que** :

   - le dispositif comporte un émetteur (66 à 70, 72, 73) configuré pour émettre une requête comportant au moins un motif (101, 111) de points (103) dont les valeurs sont lues avec le pointeur du dispositif parcourant des positions d'une mémoire de motif, l'émetteur du dispositif modulant une porteuse avec les valeurs de points du motif successivement lues,
   - chaque base comporte un récepteur (13) recevant ladite requête et un émetteur (66 à 70, 72, 73), les oscillateurs de l'émetteur et du récepteur des bases fixes et du dispositif (10) étant sensiblement de même fréquence, ledit émetteur étant configuré pour répondre à la requête avec une réponse (119) :

      a) répétant le motif reçu par la base depuis le dispositif, le pointeur de la base parcourant des positions de mémoire pour y inscrire les valeurs de points de motif reçues, puis parcourant ces positions de mémoire pour y lire les valeurs de points de motif à émettre chaque point du motif étant ainsi temporellement décalé, par rapport à l'instant de sa réception par la base, d'un multiple de fois la période du compteur de la base et/ou
      b) représentative d'un premier décalage temporel de motif, mesuré par la base, entre le motif reçu et un motif identique conservé en mémoire de la base dont les valeurs sont parcourues par le pointeur de la base, les valeurs des points d'un motif de réponse étant successivement lues en des positions de mémoire parcourues par le pointeur de la base, à partir d'une position connue par le dispositif,

   l'émetteur de la base modulant une porteuse avec les valeurs de points du motif successivement lues ;

   le dispositif comportant, de plus :

   - un moyen de mesure (61) d'un deuxième décalage temporel de motif (29, 36) entre les valeurs de points de motif reçues dans chaque réponse et les valeurs conservées en mémoire du dispositif dans les positions successivement parcourues par le pointeur du dispositif,
   - un moyen de détermination (61) de la distance entre le dispositif et chaque base en fonction, respectivement :

      a) du décalage total de motif entre le motif émis par le dispositif et le motif répété reçu par le dispositif depuis la base,
      b) du deuxième décalage de motif et du premier décalage de motif mesuré par la base ; et

   - un moyen de détermination (61) de position du dispositif en fonction d'une position connue de chaque base fixe ayant répondu et de la distance par rapport à chacune de ces bases, déterminées par le moyen de détermination.

2. Système (9) selon la revendication 1, dans lequel le dispositif (10), et chaque base (12) si elle comporte un moyen de mesure (61) de décalage de motif, comporte un moyen de mesure (61) du déphasage de la porteuse d'un signal reçu par rapport à la phase d'un signal sinusoïdal généré par une horloge du dispositif, et une horloge de chaque base si elle comporte un moyen de mesure de décalage, le moyen de détermination (61) de distance du dispositif additionnant le déphasage mesuré au décalage mesuré pour mesurer la distance du dispositif à chaque base.

3. Système (9) selon la revendication 2, dans lequel le signal (102) émis par le dispositif (10) et par chaque base (12) est en quadrature IQ et dans lequel, pour au moins un déphasage prédéterminé de la porteuse de ce signal, le signal sur la voie I est constant et le signal sur la voie Q porte la modulation en amplitude du motif (101, 111) émis par le dispositif.

4. Système (9) selon la revendication 3, dans lequel, pour mesurer le premier et le deuxième décalages, la base (12) et le dispositif (10) comportent un moyen (61) de réalisation d'un ajustement linéaire (105) des points (108) du motif (112, 119) reçu dans le plan IQ, chaque décalage mesuré étant égal au décalage de motif additionné au déphasage mesuré, ce déphasage mesuré étant égal à la différence entre :

- l'angle (107) entre la verticale dans ce plan et la droite obtenue par ajustement linéaire, et
- ledit déphasage prédéterminé.

5. Système (9) selon la revendication 3, dans lequel :

c) chaque base (12) comporte un moyen (61) de réalisation d'un ajustement linéaire (105) des points (108) du motif (112) reçu dans le plan IQ, et un moyen (61) de mesure de déphasage, ce déphasage mesuré étant égal à la différence entre

- l'angle entre la verticale dans ce plan et la droite obtenue par ajustement linéaire, et
- ledit déphasage prédéterminé ;

l'émetteur (66 à 70, 72, 73) de chaque base étant configuré pour émettre un signal IQ déphasé, par rapport au signal reçu, en négatif, de deux fois le déphasage mesuré, de telle manière que la phase du signal émis par la base est en phase avec le signal (102) émis par le dispositif (10) ;
d) le dispositif comporte un moyen (61) de réalisation d'un ajustement linéaire (105) des points du motif (119) reçu dans le plan IQ, et un moyen (61) de mesure de déphasage, ce déphasage mesuré étant égal à la différence entre

- l'angle entre la verticale dans ce plan et la droite obtenue par ajustement linéaire, et
- ledit déphasage prédéterminé ;

le décalage total mis en œuvre par le dispositif pour mesurer la distance étant la somme du décalage de motif total additionné au déphasage mesuré par le moyen de mesure du dispositif.

6. Système (9) selon l'une des revendications 1 à 5, dans lequel la période (100) des compteurs est supérieure au double de la durée maximale de vol correspondant à une distance maximale prédéterminée entre le dispositif (10) et une base (12) susceptible de répondre à une requête de ce dispositif.

7. Système (9) selon l'une des revendications 1 à 6, dans lequel un motif (75) de n points est une transformée de Fourier inverse (76) d'un spectre (77) constant en amplitude et aléatoire ou pseudo-aléatoire en phase.

8. Système (9) selon l'une des revendications 1 à 7, dans lequel chaque émetteur (66 à 70, 72, 73), du dispositif (10) et des bases (12), est configuré pour émettre des signaux sur une pluralité de porteuses ayant des fréquences différentes.

9. Système (9) selon l'une des revendications 1 à 8, dans lequel les motifs (101) émis par tous les dispositifs (10) et par toutes les bases (12) sont identiques.

10. Système (9) selon l'une des revendications 1 à 8, dans lequel les motifs (101,111) émis par au moins deux dispositifs (10) différents sont différents, le signal émis par chaque dispositif comportant des données identifiant ou représentant le motif émis par ce dispositif.

11. Système (9) selon l'une des revendications 1 à 10, dans lequel les motifs (100, 119) émis par au moins deux bases (12) différentes sont différents, le signal émis par chaque base comportant des données identifiant ou représentant le motif émis par cette base.

12. Système (9) selon l'une des revendications 1 à 11, dans lequel chaque signal (45, 49) émis par une base (12) comporte un identifiant de cette base, le moyen de détermination (61) du dispositif (10) étant configuré pour déterminer la position de cette base à partir de son identifiant.

13. Système (9) selon la revendication 12, dans lequel l'identifiant de la base (12) comporte sa position géographique.

14. Système (9) selon l'une des revendications 1 à 13, dans lequel les fréquences des signaux émis par tous les dispositifs (10) et toutes les bases (12) sont dans une bande ISM (industriel, scientifique et médical).

15. Dispositif (10) d'un système (9) de positionnement de ce dispositif comportant ledit dispositif et une pluralité de bases fixes (12), le dispositif comportant un compteur parcourant, de manière cyclique, n positions de pointeur (110) et chaque base comportant un compteur parcourant, de manière cyclique, n positions de pointeur (114) pendant une période sensiblement égale à la période de parcours des n valeurs par le compteur du dispositif, système dans lequel :

- le dispositif comporte un émetteur (66 à 70, 72, 73) configuré pour émettre une requête comportant au moins un motif (101, 111) de points (103) dont les valeurs sont lues avec le pointeur du dispositif parcourant des positions d'une mémoire de motif, l'émetteur du dispositif modulant une porteuse avec les valeurs de points du motif successivement lues,
- chaque base comporte un récepteur (13) recevant ladite requête et comporte un émetteur (66 à 70, 72, 73), les oscillateurs de l'émetteur et du récepteur des bases fixes et du dispositif (10) étant sensiblement de même fréquence, ledit émetteur étant configuré pour répondre à la requête avec une réponse (119) :

a) répétant le motif reçu par la base depuis le dispositif, le pointeur de la base parcourant des positions de mémoire pour y inscrire les valeurs de points de motif reçues, puis parcourant ces positions de mémoire pour y lire les valeurs de points de motif à émettre chaque point du motif étant ainsi temporellement décalé, par rapport à l'instant de sa réception par la base, d'un multiple de fois la période du compteur de la base et/ou
b) représentative d'un premier décalage temporel de motif, mesuré par la base, entre le motif reçu et un motif identique conservé en mémoire de la base dont les valeurs sont parcourues par le pointeur de la base, les valeurs des points d'un motif de réponse étant successivement lues en des positions de mémoire parcourues par le pointeur de la base, à partir d'une position connue par le dispositif,

l'émetteur de la base modulant une porteuse avec les valeurs de points du motif successivement lues ;
le dispositif comportant, de plus :

- un moyen de mesure (61) d'un deuxième décalage temporel de motif (29, 36) entre les valeurs de points de motif reçues dans chaque réponse et les valeurs conservées en mémoire du dispositif dans les positions successivement parcourues par le pointeur du dispositif,
- un moyen de détermination (61) de la distance entre le dispositif et chaque base en fonction, respectivement :

a) du décalage total de motif entre le motif émis par le dispositif et le motif répété reçu par le dispositif depuis la base,
b) du deuxième décalage de motif et du premier décalage de motif mesuré par la base ; et

- un moyen de détermination (61) de position du dispositif en fonction d'une position connue de chaque base fixe ayant répondu et de la distance par rapport à chacune de ces bases, déterminées par le moyen de détermination.

16. Base (12) d'un système (9) de positionnement comportant un dispositif et ladite base fixe, le dispositif comportant un compteur parcourant, de manière cyclique, n positions de pointeur (110) et ladite base comportant un compteur parcourant, de manière cyclique, n positions de pointeur (114) pendant une période sensiblement égale à la période de parcours des n valeurs par le compteur du dispositif, système dans lequel :

- le dispositif comporte un émetteur (66 à 70, 72, 73) configuré pour émettre une requête comportant au moins un motif (101, 111) de points (103) dont les valeurs sont lues avec le pointeur du dispositif parcourant des positions d'une mémoire de motif, l'émetteur du dispositif modulant une porteuse avec les valeurs de points du motif successivement lues,
- la base comporte un récepteur (13) recevant ladite requête et comporte un émetteur (66 à 70, 72, 73), les oscillateurs de l'émetteur et du récepteur de la base fixe et du dispositif (10) étant sensiblement de même fréquence, ledit émetteur étant configuré pour répondre à la requête avec une réponse (119) :

a) répétant le motif reçu par la base depuis le dispositif, le pointeur de la base parcourant des positions de mémoire pour y inscrire les valeurs de points de motif reçues, puis parcourant ces positions de mémoire pour y lire les valeurs de points de motif à émettre chaque point du motif étant ainsi temporellement décalé, par rapport à l'instant de sa réception par la base, d'un multiple de fois la période du compteur de la base et/ou
b) représentative d'un premier décalage temporel de motif, mesuré par la base, entre le motif reçu et un motif identique conservé en mémoire de la base dont les valeurs sont parcourues par le pointeur de la base, les valeurs des points d'un motif de réponse étant successivement lues en des positions de mémoire parcourues par le pointeur de la base, à partir d'une position connue par le dispositif,

l'émetteur de la base modulant une porteuse avec les valeurs de points du motif successivement lues ;
le dispositif comportant, de plus :

- un moyen de mesure (61) d'un deuxième décalage temporel de motif (29, 36) entre les valeurs de points de motif reçues dans chaque réponse et les valeurs conservées en mémoire du dispositif dans les positions successivement parcourues par le pointeur du dispositif,
- un moyen de détermination (61) de la distance entre le dispositif et chaque base en fonction, respectivement :

a) du décalage total de motif entre le motif émis par le dispositif et le motif répété reçu par le dispositif depuis la base,
b) du deuxième décalage de motif et du premier décalage de motif mesuré par la base ; et

- un moyen de détermination (61) de position du dispositif en fonction d'une position connue de la base fixe.

17. Base (12) selon la revendication 16, configurée pour se comporter en dispositif vis-à-vis d'autres bases (52) pour vérifier son positionnement, dans lequel l'émetteur (66 à 70, 72, 73) est configuré pour émettre un message de déplacement au cas où la position déterminée est différente d'une position de cette base précédemment mémorisée.

18. Base (12) selon l'une des revendications 16 ou 17, configurée pour se comporter en dispositif vis-à-vis d'autres bases associées à des points cadastraux pour déterminer sa position.

19. Procédé (80, 130) de positionnement d'un dispositif (10) dans un système comportant ledit dispositif et une pluralité de bases fixes (12), chaque base fixe et le dispositif comportant un émetteur et un récepteur, les oscillateurs de l'émetteur et du récepteur des bases fixes et du dispositif étant sensiblement de même fréquence, le dispositif comportant un compteur parcourant, de manière cyclique, n positions de pointeur (110) et chaque base comportant un compteur, parcourant, de manière cyclique, n positions de pointeur (114) pendant une période sensiblement égale à la période de parcours des n valeurs par le compteur du dispositif, procédé **caractérisé en ce qu'**il comporte :

- une étape (131) d'émission, par le dispositif d'une requête comportant au moins un motif (101, 111) de points dont les valeurs sont lues avec le pointeur du dispositif parcourant des positions d'une mémoire de motif, l'émetteur du dispositif modulant une porteuse avec les valeurs de points du motif successivement lues,
- une étape (136, 137) d'émission, par chaque base recevant ladite requête, d'une réponse (119) :

a) répétant le motif reçu par la base depuis le dispositif, le pointeur de la base parcourant des positions de mémoire pour y inscrire les valeurs de points de motif reçues, puis parcourant ces positions de mémoire pour y lire les valeurs de points de motif à émettre chaque point du motif étant ainsi temporellement décalé, par rapport à l'instant de sa réception par la base, d'un multiple de fois la période du compteur de la base et/ou
b) représentative d'un premier décalage temporel de motif, mesuré par la base, entre le motif reçu et un motif identique conservé en mémoire de la base dont les valeurs sont parcourues par le pointeur de la base, les valeurs des points d'un motif de réponse étant successivement lues en des positions de mémoire parcourues par le pointeur de la base, à partir d'une position connue par le dispositif,

l'émetteur de la base modulant une porteuse avec les valeurs de points du motif successivement lues ;
- une étape (138) de mesure, par le dispositif d'un deuxième décalage temporel de motif entre les valeurs de points de motif reçues dans chaque réponse et les valeurs conservées en mémoire du dispositif dans les positions successivement parcourues par le pointeur du dispositif,
- une étape (139) de détermination, par le dispositif, de la distance entre le dispositif et chaque base en fonction, respectivement :

a) du décalage total de motif entre le motif émis par le dispositif et le motif répété reçu par le dispositif depuis la base,
b) du deuxième décalage de motif et du premier décalage de motif mesuré par la base ; et

- une étape (140) de détermination de la position du dispositif, par le dispositif, en fonction d'une position connue de chaque base fixe ayant répondu et de la distance par rapport à chacune de ces bases, déterminées par le moyen de détermination.

20. Procédé (80, 130) selon la revendication 19, qui comporte une étape (93) d'attribution d'intervalles de temps, ou canaux temporels, aux bases fixes (12) en fonction de leur position géographique, de telle manière que deux bases fixes qui échangent des signaux avec la même base fixe n'aient pas le même intervalle de temps attribué entre elles et avec ladite même base fixe.

21. Procédé (130) selon l'une des revendications 19 ou 20, qui comporte une étape (92) de positionnement des bases fixes vis-à-vis d'autres bases associées à des points cadastraux.

22. Utilisation du procédé (130) selon l'une des revendications 19 à 21, du système (9) selon l'une des revendications 1 à 14, du dispositif (10) selon la revendication 15, et/ou de la base (12) selon l'une des revendications 16 à 18, pour guider un véhicule terrestre (11) ou aérien, guider un piéton en intérieur ou en extérieur, signaler un défaut de stationnement d'un véhicule en libre-service, géolocaliser des éléments dans l'environnement, déterminer la position et l'orientation d'un système de visualisation comportant plusieurs dispositifs à des fins de réalité augmentée pour des applications de génie civil, de loisir, de tourisme, déterminer des gestes, par exemple pour une interface gestuelle ou capter des mouvements corporels.

**Patentansprüche**

1. System (9) zur Positionierung einer Vorrichtung (10), bestehend aus der genannten Vorrichtung und einer Vielzahl von festen Grundflächen (12), wobei die Vorrichtung einen Zähler umfasst, der zyklisch n Zeigerpositionen (110) durchläuft, und jede Grundfläche einen Zähler umfasst, der zyklisch n Zeigerpositionen (114) während einer Periode durchläuft, die im Wesentlichen der Periode entspricht, in der der Zähler der Vorrichtung die n Werte durchläuft, wobei das System **dadurch gekennzeichnet ist, dass**:

- die Vorrichtung einen Sender (66 bis 70, 72, 73) umfasst, der so konfiguriert ist, dass er eine Anfrage mit mindestens einem Muster (101, 111) von Punkten (103) sendet, deren Werte mit dem Zeiger der Vorrichtung gelesen werden, der die Positionen eines Musterspeichers durchläuft, wobei der Sender der Vorrichtung einen Träger mit den nacheinander gelesenen Punktwerten des Musters moduliert,
- jede Grundfläche einen Empfänger (13) umfasst, der die Anfrage empfängt, und einen Sender (66 bis 70, 72, 73), wobei die Oszillatoren des Senders und des Empfängers der festen Grundflächen und der Vorrichtung (10) im Wesentlichen die gleiche Frequenz haben, wobei der genannte Sender so konfiguriert ist, auf die Anfrage mit einer Antwort (119) zu antworten, die:

a) das von der Grundfläche der Vorrichtung empfangene Muster wiederholt, wobei der Zeiger der Grundfläche die Speicherpositionen durchläuft, um die empfangenen Punktwerte des Musters dort einzutragen, und anschließend diese Speicherpositionen durchläuft, um die zu sendenden Punktwerte des Musters zu lesen, wobei somit jeder Punkt des Musters zeitlich um ein Vielfaches der Periode des Zählers der Grundfläche im Vergleich zu dem Zeitpunkt seines Empfangs durch die Grundfläche verschoben ist, und/oder

b) eine erste zeitliche Musterverschiebung darstellt, die von der Grundfläche gemessen wird, zwischen dem empfangenen Muster und einem identischen, im Speicher der Grundfläche gespeicherten Muster, dessen Werte vom Zeiger der Grundfläche durchlaufen werden, wobei die Punktwerte eines Antwortmusters nacheinander an den Speicherpositionen gelesen werden, die vom Zeiger der Grundfläche durchlaufen werden, beginnend an einer von der Vorrichtung bekannten Position,

wobei der Sender der Grundfläche einen Träger mit den nacheinander gelesenen Punktwerten des Musters moduliert;

wobei die Vorrichtung außerdem Folgendes umfasst:

- ein Mittel zum Messen (61) einer zweiten zeitlichen Musterverschiebung (29, 36) zwischen den in jeder Antwort empfangenen Musterpunktwerten und den im Speicher der Vorrichtung an den vom Zeiger der Vorrichtung nacheinander durchlaufenen Positionen gespeicherten Werten,
- ein Mittel zur Bestimmung (61) des Abstands zwischen der Vorrichtung und jeder Grundfläche jeweilig abhängig von:

a) der gesamten Musterverschiebung zwischen dem von der Vorrichtung gesendeten Muster und dem von der Vorrichtung von der Grundfläche empfangenen wiederholten Muster,

b) der zweiten Musterverschiebung und der ersten Musterverschiebung, gemessen von der Grundfläche; und

- ein Mittel zur Bestimmung (61) der Position der Vorrichtung abhängig von einer bekannten Position jeder festen Grundfläche, die geantwortet hat, und der Entfernung zu jeder dieser Grundflächen, die durch das Mittel zur Bestimmung bestimmt wird.

2. System (9) nach Anspruch 1, wobei die Vorrichtung (10) und jede Grundfläche (12), sofern sie ein Mittel zur Messung (61) einer Musterabweichung aufweist, ein Mittel zur Messung (61) der Phasenverschiebung des Trägers eines empfangenen Signals in Bezug auf die Phase eines von einer Uhr der Vorrichtung erzeugten Sinussignals und eine Uhr jeder Grundfläche umfasst, sofern diese ein Mittel zur Messung der Abweichung aufweist, wobei das Mittel zur Bestimmung (61) des Abstands der Vorrichtung die gemessene Phasenverschiebung zur gemessenen Abweichung addiert, um den Abstand der Vorrichtung zu jeder Grundfläche zu messen.

3. System (9) nach Anspruch 2, wobei das von der Vorrichtung (10) und von jeder Grundfläche (12) ausgesendete Signal (102) in Quadratur IQ ist und wobei für mindestens eine vorbestimmte Phasenverschiebung des Trägers dieses Signals das Signal auf dem I-Kanal konstant ist und das Signal auf dem Q-Kanal die Amplitudenmodulation des von der Vorrichtung gesendeten Musters (101, 111) trägt.

4. System (9) nach Anspruch 3, wobei zur Messung der ersten und zweiten Verschiebung die Grundfläche (12) und die Vorrichtung (10) Mittel zur Durchführung (61) einer linearen Anpassung (105) der Punkte (108) des in der IQ-Ebene empfangenen Musters (112, 119) umfassen, wobei jede gemessene Verschiebung gleich der Musterverschiebung plus der gemessenen Phasenverschiebung ist, wobei diese gemessene Phasenverschiebung gleich der Differenz zwischen:

- dem Winkel (107) zwischen der Senkrechten in dieser Ebene und der durch lineare Anpassung erhaltenen Geraden und
- der vorbestimmten Phasenverschiebung ist.

5. System (9) nach Anspruch 3, wobei:

c) jede Grundfläche (12) ein Mittel zur Durchführung (61) einer linearen Anpassung (105) der Punkte (108) des in der IQ-Ebene empfangenen Musters (112) und ein Mittel (61) zur Messung der Phasenverschiebung umfasst, wobei diese gemessene Phasenverschiebung gleich der Differenz zwischen

- dem Winkel zwischen der Vertikalen in dieser Ebene und der durch lineare Anpassung erhaltenen Geraden und
- der vorbestimmten Phasenverschiebung ist;

wobei der Sender (66 bis 70, 72, 73) jeder Grundfläche so konfiguriert ist, dass er ein IQ-Signal sendet, das gegenüber dem empfangenen Signal um das Doppelte der gemessenen Phasenverschiebung negativ phasenverschoben ist, so dass die Phase des von der Grundfläche gesendeten Signals mit dem von der Vorrichtung (10) gesendeten Signal (102) phasengleich ist;

d) die Vorrichtung ein Mittel (61) zur Durchführung einer linearen Anpassung (105) der Punkte des in der IQ-Ebene empfangenen Musters (119) und ein Mittel (61) zur Messung der Phasenverschiebung umfasst, wobei diese gemessene Phasenverschiebung gleich der Differenz zwischen

- dem Winkel zwischen der Vertikalen in dieser Ebene und der durch lineare Anpassung erhaltenen Geraden und
- der vorbestimmten Phasenverschiebung ist;

wobei die von der Vorrichtung zur Messung der Entfernung durchgeführte Gesamtverschiebung die Summe aus der gesamten Musterverschiebung und der vom Mittel zur Messung der Vorrichtung gemessenen Phasenverschiebung ist.

6. System (9) nach einem der Ansprüche 1 bis 5, wobei die Periode (100) der Zähler mehr als doppelt so lang ist wie die maximale Flugdauer, die einer vorbestimmten maximalen Entfernung zwischen der Vorrichtung (10) und einer Grundfläche (12) entspricht, die auf eine Anfrage dieser Vorrichtung reagieren kann.

7. System (9) nach einem der Ansprüche 1 bis 6, wobei ein Muster (75) aus n Punkten eine inverse Fourier-Transformation (76) eines Spektrums (77) mit konstanter Amplitude und zufälliger oder pseudozufälliger Phase ist.

8. System (9) nach einem der Ansprüche 1 bis 7, wobei jeder Sender (66 bis 70, 72, 73) der Vorrichtung (10) und der Grundflächen (12) so konfiguriert ist, dass er Signale auf einer Vielzahl von Trägern mit unterschiedlichen Frequenzen sendet.

9. System (9) nach einem der Ansprüche 1 bis 8, wobei die von allen Vorrichtungen (10) und allen Grundflächen (12) gesendeten Muster (101) identisch sind.

10. System (9) nach einem der Ansprüche 1 bis 8, wobei die von mindestens zwei verschiedenen Vorrichtungen (10) ausgesendeten Muster (101, 111) unterschiedlich sind und das von jeder Vorrichtung gesendete Signal Daten enthält, die das von dieser Vorrichtung gesendete Muster identifizieren oder darstellen.

11. System (9) nach einem der Ansprüche 1 bis 10, wobei die von mindestens zwei verschiedenen Grundflächen (12) gesendeten Muster (100, 119) unterschiedlich sind und das von jeder Grundfläche gesendete Signal Daten enthält, die das von dieser Grundfläche gesendete Muster identifizieren oder darstellen.

12. System (9) nach einem der Ansprüche 1 bis 11, wobei jedes von einer Grundfläche (12) gesendete Signal (45, 49) eine Kennung dieser Grundfläche enthält, wobei das Mittel zur Bestimmung (61) der Vorrichtung (10) so konfiguriert ist, dass es die Position dieser Grundfläche anhand ihrer Kennung bestimmt.

13. System (9) nach Anspruch 12, wobei die Kennung der Grundfläche (12) ihre geografische Position umfasst.

14. System (9) nach einem der Ansprüche 1 bis 13, wobei die Frequenzen der von allen Vorrichtungen (10) und allen Grundflächen (12) gesendeten Signale in einem ISM-Band (Industrie, Wissenschaft und Medizin) liegen.

15. Vorrichtung (10) eines Systems (9) zur Positionierung dieser Vorrichtung, die die genannte Vorrichtung und eine Vielzahl fester Grundflächen (12) umfasst, wobei die Vorrichtung einen Zähler umfasst, der zyklisch n Zeigerpositionen (110) durchläuft, und jede Grundfläche einen Zähler umfasst, der zyklisch n Zeigerpositionen (114) während einer Periode durchläuft, die im Wesentlichen der Periode entspricht, in der der Zähler der Vorrichtung die n Werte durchläuft, wobei in diesem System:

- die Vorrichtung einen Sender (66 bis 70, 72, 73) umfasst, der so konfiguriert ist, dass er eine Anfrage mit mindestens einem Muster (101, 111) von Punkten (103) sendet, deren Werte mit dem Zeiger der Vorrichtung gelesen werden, der die Positionen eines Musterspeichers durchläuft, wobei der Sender der Vorrichtung einen Träger mit den nacheinander gelesenen Punktwerten des Musters moduliert,
- jede Grundfläche einen Empfänger (13) umfasst, der die Anfrage empfängt, und einen Sender (66 bis 70, 72, 73) umfasst, wobei die Oszillatoren des Senders und des Empfängers der festen Grundflächen und der Vorrichtung (10) im Wesentlichen die gleiche Frequenz haben, wobei der genannte Sender so konfiguriert ist, auf die Anfrage mit einer Antwort (119) zu antworten, die:

a) das von der Grundfläche der Vorrichtung empfangene Muster wiederholt, wobei der Zeiger der Grundfläche die Speicherpositionen durchläuft, um die empfangenen Punktwerte des Musters dort einzutragen, und anschließend diese Speicherpositionen durchläuft, um die zu sendenden Punktwerte des Musters zu lesen, wobei somit jeder Punkt des Musters zeitlich um ein Vielfaches der Periode des Zählers der Grundfläche im Vergleich zu dem Zeitpunkt seines Empfangs durch die Grundfläche verschoben ist, und/oder
b) eine erste zeitliche Musterverschiebung darstellt, die von der Grundfläche gemessen wird, zwischen dem empfangenen Muster und einem identischen, im Speicher der Grundfläche gespeicherten Muster, dessen Werte vom Zeiger der Grundfläche durchlaufen werden, wobei die Punktwerte eines Antwortmusters nacheinander an den Speicherpositionen gelesen werden, die vom Zeiger der Grundfläche durchlaufen werden, beginnend an einer von der Vorrichtung bekannten Position,

wobei der Sender der Grundfläche einen Träger mit den nacheinander gelesenen Punktwerten des Musters moduliert;
die Vorrichtung umfasst außerdem:

- ein Mittel zum Messen (61) einer zweiten zeitlichen Musterverschiebung (29, 36) zwischen den in jeder Antwort empfangenen Musterpunktwerten und den im Speicher der Vorrichtung an den vom Zeiger der Vorrichtung nacheinander durchlaufenen Positionen gespeicherten Werten,
- ein Mittel zur Bestimmung (61) des Abstands zwischen der Vorrichtung und jeder Grundfläche jeweilig abhängig von:

a) der gesamten Musterverschiebung zwischen dem von der Vorrichtung gesendeten Muster und dem von der Vorrichtung von der Grundfläche empfangenen wiederholten Muster,
b) der zweiten Musterverschiebung und der ersten Musterverschiebung, gemessen an der Grundfläche; und

- einem Mittel zur Bestimmung (61) der Position der Vorrichtung abhängig von einer bekannten Position jeder festen Grundfläche, die geantwortet hat, und dem Abstand zu jeder dieser Grundflächen, die vom Mittel zur Bestimmung bestimmt wurden.

16. Grundfläche (12) eines Systems (9) zum Positionierung mit einer Vorrichtung und der genannten festen Grundfläche, wobei die Vorrichtung einen Zähler umfasst, der zyklisch n Zeigerpositionen (110) durchläuft, und die Grundfläche einen Zähler umfasst, der zyklisch n Zeigerpositionen (114) während einer Periode durchläuft, die im Wesentlichen der Periode entspricht, in der der Zähler der Vorrichtung die n Werte durchläuft, wobei in diesem System:

- die Vorrichtung einen Sender (66 bis 70, 72, 73) umfasst, der so konfiguriert ist, dass er eine Anfrage mit mindestens einem Muster (101, 111) von Punkten (103) sendet, deren Werte mit dem Zeiger der Vorrichtung gelesen werden, der die Positionen eines Musterspeichers durchläuft, wobei der Sender der Vorrichtung einen Träger mit den nacheinander gelesenen Punktwerten des Musters moduliert,
- die Grundfläche einen Empfänger (13) umfasst, der die Anfrage empfängt, und einen Sender (66 bis 70, 72, 73) umfasst, wobei die Oszillatoren des Senders und des Empfängers der festen Grundfläche und der Vorrichtung (10) im Wesentlichen die gleiche Frequenz haben, wobei der genannte Sender so konfiguriert ist, auf die Anfrage mit einer Antwort (119) zu antworten, die:

a) das von der Grundfläche der Vorrichtung empfangene Muster wiederholt, wobei der Zeiger der Grundfläche die Speicherpositionen durchläuft, um die empfangenen Punktwerte des Musters dort einzutragen, und anschließend diese Speicherpositionen durchläuft, um die zu sendenden Punktwerte des Musters zu lesen, wobei somit jeder Punkt des Musters zeitlich um ein Vielfaches der Periode des Zählers der Grundfläche im Vergleich zu dem Zeitpunkt seines Empfangs durch die Grundfläche verschoben ist, und/oder
b) eine erste zeitliche Musterverschiebung darstellt, die von der Grundfläche gemessen wird, zwischen dem empfangenen Muster und einem identischen, im Speicher der Grundfläche gespeicherten Muster, dessen Werte vom Zeiger der Grundfläche durchlaufen werden, wobei die Punktwerte eines Antwortmusters nacheinander an den Speicherpositionen gelesen werden, die vom Zeiger der Grundfläche durchlaufen werden, beginnend an einer von der Vorrichtung bekannten Position,

wobei der Sender der Grundfläche einen Träger mit den nacheinander gelesenen Punktwerten des Musters moduliert;
die Vorrichtung umfasst außerdem:

- ein Mittel zum Messen (61) einer zweiten zeitlichen Musterverschiebung (29, 36) zwischen den in jeder Antwort empfangenen Musterpunktwerten und den im Speicher der Vorrichtung an den vom Zeiger der Vorrichtung nacheinander durchlaufenen Positionen gespeicherten Werten,
- ein Mittel zur Bestimmung (61) des Abstands zwischen der Vorrichtung und jeder Grundfläche jeweilig abhängig von:

a) der gesamten Musterverschiebung zwischen dem von der Vorrichtung gesendeten Muster und dem von der Vorrichtung von der Grundfläche empfangenen wiederholten Muster,
b) der zweiten Musterverschiebung und der ersten Musterverschiebung, gemessen an der Grundfläche; und

- ein Mittel zur Bestimmung (61) der Position der Vorrichtung abhängig von einer bekannten Position der festen Grundfläche.

17. Grundfläche (12) nach Anspruch 16, die so konfiguriert ist, dass sie gegenüber anderen Grundflächen (52) als Vorrichtung zur Überprüfung ihrer Positionierung fungiert, wobei der Sender (66 bis 70, 72, 73) so konfiguriert ist, dass er eine Verschiebungsmeldung sendet, falls die ermittelte Position von einer zuvor gespeicherten Position dieser Grundfläche abweicht.

**18.** Grundfläche (12) nach einem der Ansprüche 16 oder 17, die so konfiguriert ist, dass sie sich gegenüber anderen mit Katasterpunkten verbundenen Grundflächen wie eine Vorrichtung verhält, um ihre Position zu bestimmen.

**19.** Verfahren (80, 130) zur Positionierung einer Vorrichtung (10) in einem System, das die Vorrichtung und eine Vielzahl von festen Grundflächen (12) umfasst, wobei jede feste Grundfläche und die Vorrichtung einen Sender und einen Empfänger umfassen, wobei die Oszillatoren des Senders und des Empfängers der festen Grundflächen und der Vorrichtung im Wesentlichen die gleiche Frequenz haben, wobei die Vorrichtung einen Zähler umfasst, der zyklisch n Zeigerpositionen (110) durchläuft, und jede Grundfläche einen Zähler umfasst, der zyklisch n Zeigerpositionen (114) während einer Periode durchläuft, die im Wesentlichen der Periode entspricht, in der der Zähler der Vorrichtung die n Werte durchläuft, wobei das Verfahren **dadurch gekennzeichnet ist, dass** es Folgendes umfasst:

- einen Schritt (131) der Sendung einer Anfrage durch die Vorrichtung, die mindestens ein Muster (101, 111) von Punkten umfasst, deren Werte mit dem Zeiger der Vorrichtung gelesen werden, der Positionen eines Musterspeichers durchläuft, wobei der Sender der Vorrichtung einen Träger mit den nacheinander gelesenen Punktwerten des Musters moduliert,
- einen Schritt (136, 137) der Sendung, bei dem jede Grundfläche, die die Anfrage empfängt, eine Antwort (119) sendet:

a) das von der Grundfläche der Vorrichtung empfangene Muster wiederholt, wobei der Zeiger der Grundfläche die Speicherpositionen durchläuft, um die empfangenen Punktwerte des Musters dort einzutragen, und anschließend diese Speicherpositionen durchläuft, um die zu sendenden Punktwerte des Musters zu lesen, wobei somit jeder Punkt des Musters zeitlich um ein Vielfaches der Periode des Zählers der Grundfläche im Vergleich zu dem Zeitpunkt seines Empfangs durch die Grundfläche verschoben ist, und/oder
b) eine erste zeitliche Musterverschiebung darstellt, die von der Grundfläche gemessen wird, zwischen dem empfangenen Muster und einem identischen, im Speicher der Grundfläche gespeicherten Muster, dessen Werte vom Zeiger der Grundfläche durchlaufen werden, wobei die Punktwerte eines Antwortmusters nacheinander an den Speicherpositionen gelesen werden, die vom Zeiger der Grundfläche durchlaufen werden, beginnend an einer von der Vorrichtung bekannten Position,

wobei der Sender der Grundfläche einen Träger mit den nacheinander gelesenen Punktwerten des Musters moduliert;
- einen Schritt (138) zur Messung durch die Vorrichtung mit einer zweiten zeitlichen Verschiebung des Musters zwischen den in jeder Antwort empfangenen Musterpunktwerten und den in der Vorrichtung gespeicherten Werten an den Positionen, die nacheinander vom Zeiger der Vorrichtung durchlaufen werden,
- einen Schritt (139) zur Bestimmung, bei dem die Vorrichtung den Abstand zwischen der Vorrichtung und jeder Grundfläche abhängig von jeweils:

a) der gesamten Musterverschiebung zwischen dem von der Vorrichtung gesendeten Muster und dem von der Vorrichtung von der Grundfläche empfangenen wiederholten Muster,
b) der zweiten Musterverschiebung und der ersten Musterverschiebung, gemessen von der Grundfläche; und

- einen Schritt (140) zur Bestimmung der Position der Vorrichtung durch die Vorrichtung anhand einer bekannten Position jeder festen Grundfläche, die geantwortet hat, und den Abstand zu jeder dieser Grundflächen, die durch das Mittel zur Bestimmung bestimmt wurden.

**20.** Verfahren (80, 130) nach Anspruch 19, das einen Schritt (93) zum Zuweisen von Zeitintervallen oder Zeitkanälen zu den festen Grundflächen (12) abhängig von ihrer geografischen Position umfasst, so dass zwei feste Grundflächen, die Signale mit derselben festen Grundflächen austauschen, nicht dasselbe Zeitintervall zwischen sich und mit derselben festen Grundfläche zugewiesen bekommen.

**21.** Verfahren (130) nach einem der Ansprüche 19 oder 20, das einen Schritt (92) zur Positionierung der festen Grundflächen gegenüber anderen Grundflächen umfasst, die mit Katasterpunkten verbunden sind.

22. Verwendung des Verfahrens (130) nach einem der Ansprüche 19 bis 21, des Systems (9) nach einem der Ansprüche 1 bis 14, der Vorrichtung (10) nach Anspruch 15 und/oder der Grundfläche (12) nach einem der Ansprüche 16 bis 18, um ein Land- oder Luftfahrzeug (11) zu führen, einen Fußgänger im Innen- oder Außenbereich zu führen, einen Parkfehler eines Selbstbedienungsfahrzeugs zu melden, die Geolokalisierung von Elementen in der Umgebung, die Bestimmung der Position und Ausrichtung eines Visualisierungssystems mit mehreren Vorrichtungen für Zwecke der erweiterten Realität für Anwendungen im Bauwesen, in der Freizeit und im Tourismus, die Bestimmung von Gesten, beispielsweise für eine gestenbasierte Schnittstelle, oder die Erfassung von Körperbewegungen.

**Claims**

1. Location system (9) for locating a device (10), said system comprising said device and a plurality of fixed bases (12), the device comprising a counter cyclically scanning through n pointer positions (110) and each base comprising a counter cyclically scanning through n pointer positions (114) during a period of time substantially equal to the period of time for the counter of the device to scan through n values, which system is **characterised in that**:

   - the device comprises a transmitter (66 to 70, 72, 73) configured to transmit a request comprising at least one pattern (101, 111) of points (103), the values of which are read with the pointer of the device scanning through positions of a pattern memory, the transmitter of the device modulating a carrier with the values of the consecutively read points of the pattern,
   - each base comprises a receiver (13) receiving said request and a transmitter (66 to 70, 72, 73), the oscillators of the transmitter and receiver of the fixed bases and of the device (10) having substantially the same frequency, said transmitter being configured to respond to the request with a response (119):

      a) repeating the pattern the base received from the device, the pointer of the base scanning through memory positions in order to record therein the values of pattern points received, then scanning through these memory positions in order to read therein the values of pattern points to be transmitted, each point of the pattern thus being time shifted relative to the time of its reception by the base, by a multiple of the period of the counter of the base; and/or
      b) representative of a first pattern time shift, measured by the base, between the pattern received and an identical pattern stored in the memory of the base, the values of which are scanned through by the pointer of the base, the values of the points of a response pattern being read consecutively in memory positions scanned through by the pointer of the base, starting from a position known to the device,

   the transmitter of the base modulating a carrier with the values of the consecutively read points of the pattern;

   the device also comprising:

      - a measurement means (61) for measuring a second pattern time shift (29, 36) between the values of pattern points received in each response and the values stored in the memory of the device in the positions consecutively scanned through by the pointer of the device,
      - a determination means (61) for determining the distance between the device and each base as a function, respectively, of:

         a) the total pattern shift between the pattern transmitted by the device and the repeated pattern the device received from the base,
         b) the second pattern shift and the first pattern shift measured by the base; and

      - a determination means (61) for determining the location of the device as a function of a known location of each fixed base that responded and of the distance from each of these bases, determined by the determination means.

2. System (9) according to claim 1 wherein the device (10), and each base (12) if it comprises a measurement means (61) for measuring the pattern shift, comprises a measurement means (61) for measuring the phase shift of the carrier of a signal received relative to the phase of a sinusoidal signal generated by a clock of the device, and by a clock of each base if it comprises a measurement means for measuring the shift, the determination means (61) for determining the distance of the device adding the measured phase shift to the measured shift in order to measure the distance of the device to each base.

3. System (9) according to claim 2 wherein the signal (102) transmitted by the device (10) and by each base (12) is an IQ quadrature signal, and wherein, for at least one predetermined phase shift for the carrier of this signal, the signal on the I channel is constant and the signal on the Q channel carries the amplitude modulation of the pattern (101, 111) transmitted by the device.

4. System (9) according to claim 3 wherein, to measure the first and second shifts, the base (12) and the device (10) comprise a means (61) for performing a linear adjustment (105) of the points (108) of the pattern (112, 119) received in the IQ plane, each shift measured being equal to the pattern shift added to the phase shift measured, this measured phase shift being equal to the difference between:

- the angle (107) between the vertical in this plane and the straight line obtained by linear adjustment, and
- said predetermined phase shift.

5. System (9) according to claim 3 wherein:

c) each base (12) comprises a means (61) for performing a linear adjustment (105) of the points (108) of the pattern (112) received in the IQ plane, and a means (61) for measuring the phase shift, this measured phase shift being equal to the difference between

- the angle between the vertical in this plane and the straight line obtained by linear adjustment, and
- said predetermined phase shift;

the transmitter (66 to 70, 72, 73) of each base being configured to transmit an IQ signal having a negative phase shift, relative to the signal received, of twice the phase shift measured, such that the phase of the signal transmitted by the base is in phase with the signal (102) transmitted by the device (10);
d) the device comprises a means (61) for performing a linear adjustment (105) of the points of the pattern (119) received in the IQ plane, and a means (61) for measuring the phase shift, this measured phase shift being equal to the difference between

- the angle between the vertical in this plane and the straight line obtained by linear adjustment, and
- said predetermined phase shift;

the total shift utilised by the device to measure the distance being the sum of the total pattern shift added to the phase shift measured by the measurement means of the device.

6. System (9) according to one of claims 1 to 5 wherein the period (100) of the counters is greater than twice the maximum time of flight corresponding to a predetermined maximum distance between the device (10) and a base (12) likely to respond to a request from this device.

7. System (9) according to one of claims 1 to 6 wherein a pattern (75) of n points is an inverse Fourier transform (76) of a spectrum (77) that is constant in amplitude and random or pseudo-random in phase.

8. System (9) according to one of claims 1 to 7 wherein each transmitter (66 to 70, 72, 73), of the device (10) and of the bases (12), is configured to transmit signals on a plurality of carriers having different frequencies.

9. System (9) according to one of claims 1 to 8 wherein the patterns (101) transmitted by all the devices (10) and by all the bases (12) are identical.

10. System (9) according to one of claims 1 to 8 wherein the patterns (101, 111) transmitted by at least two different devices (10) are different, the signal transmitted by each device comprising data identifying or representing the pattern transmitted by that device.

11. System (9) according to one of claims 1 to 10 wherein the patterns (100, 119) transmitted by at least two different devices (12) are different, the signal transmitted by each base comprising data identifying or representing the pattern transmitted by that base.

12. System (9) according to one of claims 1 to 11 wherein each signal (45, 49) transmitted by a base (12) comprises an identifier of that base, the determination means (61) of the device (10) being configured to determine the location of that base from its identifier.

13. System (9) according to claim 12 wherein the identifier of the base (12) comprises its geographic location.

14. System (9) according to one of claims 1 to 13 wherein the frequencies of the signals transmitted by all the devices (10) and all the bases (12) are in an ISM (industrial, scientific, and medical) band.

15. Device (10) of a location system (9) for locating this device, said system comprising said device and a plurality of fixed bases (12), the device comprising a counter cyclically scanning through n pointer positions (110) and each base comprising a counter cyclically scanning through n pointer positions (114) during a period of time substantially equal to the period of time for the counter of the device to scan through n values, system wherein:

- the device comprises a transmitter (66 to 70, 72, 73) configured to transmit a request comprising at least one pattern (101, 111) of points (103), the values of which are read with the pointer of the device scanning through positions of a pattern memory, the transmitter of the device modulating a carrier with the values of the consecutively read points of the pattern,
- each base comprises a receiver (13) receiving said request and comprises a transmitter (66 to 70, 72, 73), the oscillators of the transmitter and receiver of the fixed bases and of the device (10) having substantially the same frequency, said transmitter being configured to respond to the request with a response (119):

a) repeating the pattern the base received from the device, the pointer of the base scanning through memory positions in order to record therein the values of pattern points received, then scanning through these memory positions in order to read therein the values of pattern points to be transmitted, each point of the pattern thus being time shifted relative to the time of its reception by the base, by a multiple of the period of the counter of the base; and/or
b) representative of a first pattern time shift, measured by the base, between the pattern received and an identical pattern stored in the memory of the base, the values of which are scanned through by the pointer of the base, the values of the points of a response pattern being read consecutively in memory positions scanned through by the pointer of the base, starting from a position known to the device,

the transmitter of the base modulating a carrier with the values of the consecutively read points of the pattern; the device also comprising:

- a measurement means (61) for measuring a second pattern time shift (29, 36) between the values of pattern points received in each response and the values stored in the memory of the device in the positions consecutively scanned through by the pointer of the device,
- a determination means (61) for determining the distance between the device and each base as a function, respectively, of:

a) the total pattern shift between the pattern transmitted by the device and the repeated pattern the device received from the base,
b) the second pattern shift and the first pattern shift measured by the base; and

- a determination means (61) for determining the location of the device as a function of a known location of each fixed base that responded and of the distance from each of these bases, determined by the determination means.

16. Base (12) of a location system (9) comprising a device and said fixed base, the device comprising a counter cyclically scanning through n pointer positions (110) and said base comprising a counter cyclically scanning through n pointer positions (114) during a period of time substantially equal to the period of time for the counter of the device to scan through n values, system wherein:

- the device comprises a transmitter (66 to 70, 72, 73) configured to transmit a request comprising at least one pattern (101, 111) of points (103), the values of which are read with the pointer of the device scanning through positions of a pattern memory, the transmitter of the device modulating a carrier with the values of the consecutively read points of the pattern,
- the base comprises a receiver (13) receiving said request and comprises a transmitter (66 to 70, 72, 73), the oscillators of the transmitter and receiver of the fixed base and of the device (10) having substantially the same frequency, said transmitter being configured to respond to the request with a response (119):

> a) repeating the pattern the base received from the device, the pointer of the base scanning through memory positions in order to record therein the values of pattern points received, then scanning through these memory positions in order to read therein the values of pattern points to be transmitted, each point of the pattern thus being time shifted relative to the time of its reception by the base, by a multiple of the period of the counter of the base; and/or
>
> b) representative of a first pattern time shift, measured by the base, between the pattern received and an identical pattern stored in the memory of the base, the values of which are scanned through by the pointer of the base, the values of the points of a response pattern being read consecutively in memory positions scanned through by the pointer of the base, starting from a position known to the device,

the transmitter of the base modulating a carrier with the values of the consecutively read points of the pattern; the device also comprising:

> - a measurement means (61) for measuring a second pattern time shift (29, 36) between the values of pattern points received in each response and the values stored in the memory of the device in the positions consecutively scanned through by the pointer of the device,
> - a determination means (61) for determining the distance between the device and each base as a function, respectively, of:
>
> > a) the total pattern shift between the pattern transmitted by the device and the repeated pattern the device received from the base,
> > b) the second pattern shift and the first pattern shift measured by the base; and
>
> - a determination means (61) for determining the location of the device as a function of a known location of the fixed base.

17. Base (12) according to claim 16, configured to act as a device with regard to other bases (52) for verifying its location, wherein the transmitter (66 to 70, 72, 73) is configured to transmit a movement message in the case where the location determined is different from a previously stored location of this base.

18. Base (12) according to one of claims 16 or 17, configured to act as a device with regard to other bases associated to cadastral points for determining its location.

19. Location method (80, 130) for locating a device (10) in a system comprising said device and a plurality of fixed bases (12), each fixed base and the device comprising a transmitter and a receiver, the oscillators of the transmitter and receiver of the fixed bases and of the device having substantially the same frequency, the device comprising a counter cyclically scanning through n pointer positions (110) and each base comprising a counter cyclically scanning through n pointer positions (114) during a period of time substantially equal to the period of time for the counter of the device to scan through n values, which method is **characterised in that** it comprises:

> - a step (131) of the device transmitting a request comprising at least one pattern (101, 111) of points, the values of which are read with the pointer of the device scanning through positions of a pattern memory, the transmitter of the device modulating a carrier with the values of the consecutively read points of the pattern,
> - a step (136, 137) of each base receiving said request transmitting a response (119):
>
> > a) repeating the pattern the base received from the device, the pointer of the base scanning through memory positions in order to record therein the values of pattern points received, then scanning through these memory positions in order to read therein the values of pattern points to be transmitted, each point of the pattern thus being time shifted relative to the time of its reception by the base, by a multiple of the period of the counter of the base; and/or
> > b) representative of a first pattern time shift, measured by the base, between the pattern received and an identical pattern stored in the memory of the base, the values of which are scanned through by the pointer of the base, the values of the points of a response pattern being read consecutively in memory positions scanned through by the pointer of the base, starting from a position known to the device,

the transmitter of the base modulating a carrier with the values of the consecutively read points of the pattern;

- a step (138) of the device measuring a second pattern time shift between the values of pattern points received in each response and the values stored in the memory of the device in the positions consecutively scanned through by the pointer of the device,
- a step (139) of the device determining the distance between the device and each base as a function, respectively, of:

a) the total pattern shift between the pattern transmitted by the device and the repeated pattern the device received from the base,
b) the second pattern shift and the first pattern shift measured by the base; and

- a step (140) of the device determining the location of the device as a function of a known location of each fixed base that responded and of the distance from each of these bases, determined by the determination means.

20. Method (80, 130) according to claim 19, which comprises a step (93) of allocating time slots, or time channels, to the fixed bases (12) as a function of their geographic location, such that the same time interval is not allocated to two fixed bases exchanging signals with the same fixed base, nor to said same fixed base.

21. Method (130) according to one of claims 19 or 20, which comprises a step (92) of locating fixed bases in relation to other bases associated to cadastral points.

22. Use of the method (130) according to one of claims 19 to 21, of the system (9) according to one of claims 1 to 14, of the device (10) according to claim 15, and/or of the base (12) according to one of claims 16 to 18, for guiding a terrestrial vehicle (11) or air vehicle, guiding a pedestrian indoors or outdoors, signalling a parking error for a self-service vehicle, geolocating elements in the environment, determining the location and orientation of a visualisation system comprising several devices for augmented reality purposes for civil engineering, leisure, tourism applications, determining gestures, for example for a gestural interface or capturing body movements.

Figure 1

Figure 8

Figure 2

Figure 3

Figure 4

Figure 5

Figure 6

Figure 7

Figure 9

Figure 10

| Emission de 1$^{er}$ signal (1$^{ère}$ horloge) | — 81 |
| Réception de 1$^{er}$ signal (1$^{ère}$ horloge) | — 82 |
| Mesure de 1$^{er}$ déphasage | — 83 |
| Intégration de 1$^{er}$ déphasage dans 2$^{nd}$ signal | — 84 |
| Emission de 2$^{nd}$ signal (2$^{nde}$ horloge) | — 85 |
| Réception de 2$^{nd}$ signal (2$^{nde}$ horloge) | — 86 |
| Mesure de 2$^{nd}$ déphasage | — 87 |
| Levée d'indétermination | — 88 |
| Mesure d'au moins quatre distances | — 89 |
| Détermination de position | — 90 |
| Mise à jour des distances entre bases | — 91 |
| Mise à jour des distances avec points cadastraux | — 92 |
| Attribution de slots aux bases fixes | — 93 |

80

Figure 11

Figure 12

Figure 13

Figure 14

Figure 15

Figure 16

| | |
|---|---|
| Emission d'un 1er signal I/Q avec I constant et Q modulé par un motif du dispositif | 131 |
| Réception du 1er signal | 132 |
| Ajustement linéaire des points de motif reçus | 133 |
| Mesure de 1er déphasage | 134 |
| Mesure de 1er décalage de motif | 135 |
| Intégration de 1er déphasage et 1er décalage dans un 2nd signal I/Q | 136 |
| Emission et réception du 2ème signal | 137 |
| Mesure de 2ème déphasage et 2ème décalage | 138 |
| Mesure d'au moins quatre distances | 139 |
| Détermination de position | 140 |
| Mise à jour des distances entre bases | 91 |
| Mise à jour des distances avec points cadastraux | 92 |
| Attribution de slots aux bases fixes | 93 |

130

Figure 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010321245 A